# EUROPEAN PATENT APPLICATION

(11) **EP 4 734 504 A1**
(43) Date of publication of application: **29.04.2026**
(21) Application number: 24832308.1
(22) Date of filing: 07.06.2024
(51) Int. Cl.: H04N 13/305, G02B 25/00, G02B 30/27, H04N 13/139, H04N 13/327, H04N 13/349, H04N 13/30

(54) **ELECTRONIC DEVICE AND OPERATION METHOD OF ELECTRONIC DEVICE**

(30) Priority: 29.06.2023 KR 20230084481; 10.10.2023 KR 20230134357
(71) Applicant: Samsung Electronics Co., Ltd., Suwon-si, Gyeonggi-do 16677 (KR)
(72) Inventor: LIM, Kyungmin, Suwon-si, Gyeonggi-do 16677 (KR); KIM, Daeyeong, Suwon-si, Gyeonggi-do 16677 (KR); LEE, Jaesung, Suwon-si, Gyeonggi-do 16677 (KR)
(74) Representative: Gulde & Partner
(86) International application number: PCT/KR2024/007770
(87) International publication number: WO 2025/005528

(57) **Abstract**

An electronic device includes a display displaying an image including a plurality of pixels, an optical layer arranged on the display and enlarging the image to provide an enlarged image including a plurality of enlarged pixels, a lenticular lens arranged on the optical layer and providing a plurality of view images based on the enlarged image, memory, and a processor, wherein the processor acquires a plurality of input images respectively corresponding to a plurality of views, acquires an optical correction map, classifies the plurality of enlarged pixels as a plurality of enlarged view pixels, based on information about the positions of the plurality of enlarged pixels and a plurality of view areas included in the lenticular lens 130, and displays the plurality of input images as the image on each of a plurality of view pixels respectively corresponding to the plurality of enlarged view pixels, based on the acquired optical correction map.

## Description

### Technical Field

The present disclosure relates to an electronic device and an operating method of the electronic device. More particularly, the present disclosure relates to an electronic device including a display, an optical layer, and a lenticular lens, and an operating method of the electronic device.

### Background Art

With developments in electronic technology, various types of electronic devices have been developed and widely distributed. Electronic devices, including display devices that display images, have been rapidly developed in recent years.

As electronic devices have evolved, the types of images displayed by electronic devices have also diversified. Electronic devices capable of displaying not only twodimensional (2D) images but also three-dimensional (3D) images have been developed.

Recently, in order to display 3D images, electronic devices and methods for displaying 3D images by using the characteristics of lenticular lenses have been proposed. Electronic devices that utilize lenticular lenses to provide different images to a user depending on the user's viewing position have been developed.

Furthermore, as a plurality of images from various viewpoints must be displayed on a display to provide different images depending on the user's viewpoint, electronic devices and methods for increasing the resolution of each of the plurality of images displayed on the display have been developed.

### Disclosure of Invention

### Solution to Problem

One embodiment of the present disclosure provides an electronic device. The electronic device may include a display that displays an image including a plurality of pixels. The electronic device may include an optical layer arranged on the display and enlarging the image to provide an enlarged image including a plurality of enlarged pixels. The electronic device may include a lenticular lens arranged on the optical layer and providing a plurality of view images based on the enlarged image. The electronic device may include memory that stores at least one instruction. The electronic device may include at least one processor that executes the at least one instruction stored in the memory. The at least one processor may acquire a plurality of input images respectively corresponding to a plurality of views. The at least one processor may acquire an optical correction map including information about the positions of the plurality of pixels and information about the positions of the plurality of enlarged pixels. The at least one processor may classify the plurality of enlarged pixels as a plurality of enlarged view pixels on which the plurality of view images will be displayed, based on the information about the positions of the plurality of enlarged pixels and a plurality of view areas included in the lenticular lens. The at least one processor may display the plurality of input images as the image on each of a plurality of view pixels respectively corresponding to the plurality of enlarged view pixels from among the plurality of pixels, based on the acquired optical correction map.

An embodiment of the present disclosure provides an operating method of an electronic device. The operating method of the electronic device may include acquiring a plurality of input images respectively corresponding to a plurality of views. The operating method of the electronic device may include acquiring an optical correction map including information about the positions of a plurality of pixels included in an image displayed through a display and information about the positions of a plurality of enlarged pixels included in an enlarged image provided through an optical layer arranged on the display, the enlarged image being obtained by enlarging the image. The operating method of the electronic device may include classifying the plurality of enlarged pixels as a plurality of enlarged view pixels on which the plurality of view images will be displayed, based on the information about the positions of the plurality of enlarged pixels and a plurality of view areas corresponding to the plurality of view images provided through a lenticular lens arranged on the optical layer. The operating method of the electronic device may include displaying, on the display, the plurality of input images as the image on each of a plurality of view pixels respectively corresponding to the plurality of enlarged view pixels from among the plurality of pixels, based on the acquired optical correction map.

According to an embodiment of the present disclosure, a computer-readable recording medium having recorded thereon a computer program, which, when executed by a computer, performs at least one of the above-disclosed embodiments of the operating method may be provided.

The technical problems to be addressed in the present disclosure are not limited to the above-mentioned technical problems, and other technical problems not mentioned will be clearly understood by a person skilled in the art to which the present disclosure pertains from the following description.

### Brief Description of Drawings

The present disclosure may be readily understood by reference to the following detailed description and the accompanying drawings, in which reference numerals refer to structural elements.
FIG. 1 is a view for explaining an operation of an electronic device according to an embodiment of the present disclosure.
FIG. 2 is a block diagram for explaining a configuration of an electronic device according to an embodiment of the present disclosure.
FIG. 3 is a view for explaining a bezel area and a display area included in a display, according to an embodiment of the present disclosure.
FIG. 4 is a view for explaining an enlarged image provided through an optical layer, according to an embodiment of the present disclosure.
FIG. 5 is a view for explaining an image displayed through a display and an enlarged image provided through an optical layer, according to an embodiment of the present disclosure.
FIG. 6 is a view for explaining an arrangement of a display, an optical layer, and a lenticular lens, according to an embodiment of the present disclosure.
FIG. 7A is a view for explaining an operation of classifying a plurality of pixels, included in an image displayed through a display, as a plurality of view pixels, according to an embodiment of the present disclosure.
FIG. 7B is a view for explaining a relationship between a plurality of enlarged view pixels and a plurality of view areas included in a lenticular lens, according to an embodiment of the present disclosure.
FIG. 8 is a flowchart for explaining an operation of an electronic device according to an embodiment of the present disclosure.
FIG. 9 is a view for explaining an operation of an electronic device including an optical layer, according to an embodiment of the present disclosure.
FIG. 10A is a view for explaining an optical correction map including information about the positions of a plurality of pixels and information about the positions of a plurality of enlarged pixels, according to an embodiment of the present disclosure.
FIG. 10B is a view for explaining an optical correction map including information about the positions of a plurality of pixels and information about the positions of a plurality of enlarged pixels, according to an embodiment of the present disclosure.
FIG. 11A is a view for explaining an operation of classifying an enlarged view pixel and a view pixel by using a lenticular lens and a plurality of enlarged pixels included in an enlarged image provided through an optical layer, according to an embodiment of the present disclosure.
FIG. 11B is a view for explaining an operation of classifying an enlarged view pixel by using a lenticular lens and a plurality of enlarged pixels included in an enlarged image provided through an optical layer, according to an embodiment of the present disclosure.
FIG. 12 is a flowchart for explaining an operation of an electronic device that displays an image by using a plurality of converted images whose resolutions are converted using an optical correction map, according to an embodiment of the present disclosure.
FIG. 13 is a block diagram for explaining an operation of an electronic device that displays an image by using a plurality of converted images whose resolutions are converted using an optical correction map, according to an embodiment of the present disclosure.
FIG. 14 is a flowchart for explaining an operation of determining a plurality of selected images among a plurality of converted images, according to an embodiment of the present disclosure.
FIG. 15A is a view for explaining an enlargement ratio between the area of an image and the area of an enlarged image and a plurality of converted images converted to have a second resolution, according to an embodiment of the present disclosure.
FIG. 15B is a view for explaining a plurality of input images and a plurality of converted images whose resolutions are converted using an enlargement ratio, according to an embodiment of the present disclosure.
FIG. 15C is a view for explaining an operation of determining a plurality of selected pixels from among a plurality of converted pixels, according to an embodiment of the present disclosure.

### Mode for the Invention

Hereinafter, the terms used in the specification will be briefly described, and then the present disclosure will be described in detail.

Although general terms widely used at present were selected for describing the present disclosure in consideration of the functions thereof, these general terms may vary according to intentions of one of ordinary skill in the art, case precedents, the advent of new technologies, and the like. Terms arbitrarily selected by the applicant of the present disclosure may also be used in a specific case. In this case, their meanings need to be given in the detailed description of an embodiment of the present disclosure. Hence, the terms must be defined based on their meanings and the contents of the entire specification, not by simply stating the terms.

An expression used in the singular may encompass the expression of the plural, unless it has a clearly different meaning in the context. Unless otherwise defined, all terms (including technical and scientific terms) used herein have the same meaning as commonly understood by one of ordinary skill in the art to which the present disclosure belongs.

The terms "comprises" and/or "comprising" or "includes" and/or "including" used herein specify the presence of stated elements, but do not preclude the presence or addition of one or more other elements. The terms "unit", "-er (-or)", and "module" when used in this specification refers to a unit in which at least one function or operation is performed, and may be implemented as hardware, software, or a combination of hardware and software.

The expression "configured to (or set to)" used therein may be used interchangeably with, for example, "suitable for", "having the capacity to", "designed to", "adapted to", "made to", or "capable of", according to situations. The expression "configured to (or set to)" may not only necessarily refer to "specifically designed to" in terms of hardware. Instead, in some situations, the expression "system configured to" may refer to a situation in which the system is "capable of" together with another device or parts. For example, the phrase "a processor configured (or set) to perform A, B, and C" may mean a dedicated processor (such as an embedded processor) for performing a corresponding operation, or a generic-purpose processor (such as a central processing unit (CPU) or an application processor (AP)) that can perform a corresponding operation by executing one or more software programs stored in memory.

When an element (e.g., a first element) is "coupled to" or "connected to" another element (e.g., a second element), the first element may be directly coupled to or connected to the second element, or, unless otherwise described, a third element may exist therebetween.

Embodiments of the present disclosure are described in detail herein with reference to the accompanying drawings so that the present disclosure may be easily performed by one of ordinary skill in the art to which the present disclosure pertains. An embodiment of the present disclosure may, however, be embodied in many different forms and should not be construed as being limited to the embodiment set forth herein. In the drawings, parts irrelevant to the description are omitted for simplicity of explanation, and like numbers refer to like elements throughout.

An embodiment of the present disclosure now will be described more fully hereinafter with reference to the accompanying drawings.

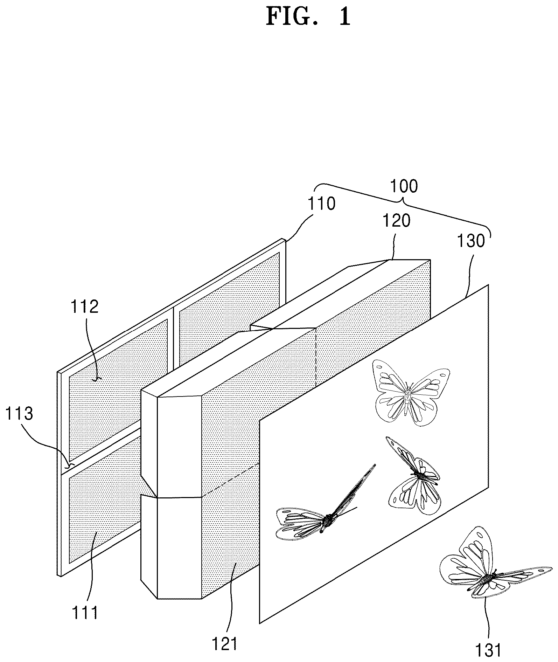

FIG. 1 is a view for explaining an operation of an electronic device according to an embodiment of the present disclosure.

Referring to FIG. 1, in an embodiment, FIG. 1 illustrates an electronic device 100 that provides content 131 to a user. In an embodiment, the electronic device 100 may include a display 110, an optical layer 120, and a lenticular lens 130.

In an embodiment, although the electronic device 100 is illustrated in FIG. 1 as having the shape of a television, the present disclosure is not limited thereto. The electronic device 100 may be implemented as electronic devices having various shapes, such as a digital signage, a mobile device, a smart phone, a laptop computer, a desktop, a tablet PC, a wearable device, a head-mounted display (HMD), and the like.

In an embodiment, the electronic device 100 may acquire a plurality of input images corresponding to a plurality of different views, respectively. The plurality of input images may be images acquired by photographing a real object from the plurality of different views. However, the present disclosure is not limited thereto, and the plurality of input images may also be images generated to provide images of an object from the plurality of different views. In this case, a "view" may correspond to a position where a user may view different sides of an object included in the content 131 provided through the electronic device 100.

In an embodiment, the content 131 may be provided so that the user may view different sides of an object in each of the plurality of views, depending on the user's position while viewing the electronic device 100. In an embodiment, the content 131 provided by the electronic device 100 to the user may vary depending on the user's position. In an embodiment, the content 131 may be an image that may provide a three-dimensional effect to a user 150 using the electronic device 100.

In an embodiment, the electronic device 100 may control the display 110 to display an image 111 including a plurality of pixels. The display 110 may display the image 111 including the plurality of pixels. In an embodiment, the plurality of pixels may be individual elements constituting the image 111. As the resolution of the image 111 increases, the number of pixels included in the image 111 may increase. In an embodiment, the resolution of the image 111 may refer to the resolution of a plurality of pixels constituting the display 110 that displays the image 111.

In an embodiment, the lenticular lens 130 may include a plurality of lenses. The image 111 displayed on the display 110 may be refracted through the lenticular lens 130 and provided to the user as the content 131. Based on the position of each of the plurality of pixels included in the image 111 and the shape or characteristics of the lenticular lens 130, the content 131 provided to the user after the image 111 is refracted through the lenticular lens 130 may vary depending on the user's position.

In an embodiment, the lenticular lens 130 may include a plurality of view areas. An image provided to the plurality of view areas may be refracted by the lenticular lens 130 and provided as a plurality of view images provided from different views. The view images may be images provided to a user positioned at different views. In an embodiment, the content 131 may be composed of a plurality of view images.

In an embodiment, the image 111 included in the display 110 may include a plurality of pixel images corresponding to the plurality of view images provided through the lenticular lens 130. In an embodiment, when the lenticular lens 130 includes n view areas for providing different images in n views, the image 111 may include n pixel images corresponding to n view images. In this case, the n pixel images respectively corresponding to the n view images may be displayed at positions corresponding to the n view areas included in the lenticular lens 130.

In an embodiment, the resolution of the image 111 in the present disclosure may refer to the resolution of each of the n pixel images. In an embodiment, each of the n pixel images may be an image composed of 1/n times the plurality of pixels included in the display 110. In an embodiment, each of the n pixel images may have a resolution that is 1/n times the resolution in the specifications of the display 110. Therefore, the resolution of the content 131 provided to the user through the electronic device 100 from different views may be lower than the resolution in the specifications of the display 110.

Accordingly, by displaying the image 111 through the display 110 having a high resolution, even when the content 131 is provided to the user from different views through the electronic device 100, the user may avoid perceiving degradation in the image quality of the content 131.

To this end, the display 110 may include a plurality of sub-displays, each capable of displaying a high-resolution sub-image. The electronic device 100 may display the image 111 through a plurality of sub-images respectively displayed on the plurality of sub-displays. In an embodiment, the electronic device 100 may control the plurality of sub-displays to display the image 111 through the plurality of sub-images. When displaying the image 111 by using high-resolution sub-displays, the resolution of the image 111 may also be high.

In an embodiment, the image 111 displayed through the plurality of sub-displays may be refracted by the lenticular lens 130 and provided to the user as the content 131. The image 111 displayed through the plurality of sub-displays may be an image composed of a plurality of high-resolution sub-images respectively displayed on the plurality of sub-displays. Accordingly, even when each of the n view images provided through the lenticular lens 130 has a resolution that is 1/n times the resolution in the display specifications, the content 131 having a higher resolution than when the image 111 is displayed through a single display may be provided to the user.

However, the display 110 may include a display area 112 where the image 111 is displayed and a bezel area 113 adjacent to the display area 112. In an embodiment, the bezel area 113 may be an area where the image 111 is not displayed. In this case, the optical layer 120 may be arranged on the display 110 so that the image 111 is displayed even in the bezel area 113. The optical layer 120 may provide an enlarged image 121 obtained by enlarging the image 111 displayed on the display 110. In an embodiment, by enlarging the image 111 displayed in the display area 112, the enlarged image 121 that overlaps the display area 112 and the bezel area 113 may be provided.

Furthermore, in an embodiment, the plurality of sub-displays may be arranged adjacent to each other and controlled to display a single image 111 through a plurality of sub-images. Each of the plurality of sub-displays may include a sub-display area where a sub-image is displayed and a sub-bezel area adjacent to the sub-display area. In an embodiment, the sub-bezel area may be an area where a sub-image is not displayed.

In an embodiment, the enlarged image 121 may be provided by enlarging a plurality of sub-images through the optical layer 120 so that an area where a sub-image is not displayed due to the sub-bezel area is not included in the image 111. In an embodiment, the enlarged image 121 may include a plurality of enlarged sub-images. The plurality of enlarged sub-images may be images in which the sub-images are enlarged to an area where a sub-image is not displayed due to the sub-bezel area. Accordingly, the enlarged image 121 may not include the area where a sub-image is not displayed due to the sub-bezel area.

In an embodiment, the enlarged image 121 may be refracted by the lenticular lens 130 and provided to the user as the content 131. The enlarged image 121 may include a plurality of enlarged pixel images corresponding to a plurality of view images provided to a plurality of view areas of the lenticular lens 130. In this case, because the enlarged image 121 is an image obtained by enlarging the image 111 displayed at a high resolution by a plurality of sub-displays, each of the plurality of enlarged pixel images may also have a high resolution. Furthermore, a plurality of view images may be provided to the user through the enlarged image 121 without any portion where the image 111 is not displayed due to the sub-bezel area between adjacent sub-displays.

In an embodiment, the enlarged image 121 may include a plurality of enlarged pixels. The plurality of enlarged pixels may respectively correspond to a plurality of pixels included in the image 111. The plurality of enlarged pixels may be pixels obtained by enlarging a plurality of pixels, respectively, through the optical layer 120. In an embodiment, the plurality of enlarged pixels may be pixels obtained by enlarging a plurality of pixels overlapping the display area 112 to overlap the display area 112 and the bezel area 113.

In this case, at least one enlarged pixel corresponding to each of the plurality of view areas from among the plurality of enlarged pixels may be different from at least one pixel corresponding to each of the plurality of view areas from among the plurality of pixels. In an embodiment, a plurality of enlarged pixel images respectively corresponding to a plurality of view images may be different from a plurality of pixel images respectively corresponding to the plurality of view images. Therefore, the positions at which the plurality of pixel images corresponding to the plurality of view images provided through the lenticular lens 130 are displayed on the display 110 may be determined by considering a positional relationship between the plurality of view areas and the plurality of enlarged pixels, rather than a positional relationship between the plurality of view areas included in the lenticular lens 130 and the plurality of pixels.

In an embodiment, the positions of a plurality of enlarged pixel images corresponding to a plurality of view images within the enlarged image 121 may be calculated by considering a positional relationship between a plurality of view areas and the plurality of enlarged pixels, and the positions of a plurality of pixel images included in the image 111 for providing the content 131 may be calculated by considering a positional relationship between a plurality of enlarged pixels and a plurality of pixels.

In an embodiment, the electronic device 100 may calculate the positions of a plurality of pixel images included in the image 111 to be displayed through the display 110, by considering a positional relationship between a plurality of view areas, a plurality of enlarged pixels, and a plurality of pixels. The electronic device 100 may display the image 111 on the display 110 according to the calculated positions, and the displayed image 111 may be provided as the enlarged image 121 through the optical layer 120, and the enlarged image 121 may be provided as the content 131 to the user through the lenticular lens 130.

In an embodiment, the enlarged image 121 may be an image provided by enlarging an image adjacent to the bezel area 113 from among images 111 displayed in the display area 112. In an embodiment, the optical layer 120 may enlarge an image displayed in an area adjacent to the bezel area 113 from among the images 111 displayed in the display area 112 and provide the enlarged image as the enlarged image 121. An image displayed in an area spaced apart from the bezel area 113 from among the images 111 may be provided without being enlarged by the optical layer 120.

In this case, only an image (e.g., an image displayed in an area adjacent to the bezel area 113) displayed in some area from among the images 111 displayed on the display 110 may be enlarged, and an image displayed in the remaining area may be provided as the enlarged image 121 without being enlarged. Therefore, the user may experience a sense of incongruity with respect to the content 131 provided using the enlarged image 121.

Accordingly, the electronic device 100 of the present disclosure may determine an image 111 to be displayed on the display 110 by considering that only an image displayed in some area from among the images 111 displayed on the display 110 is enlarged by the optical layer 120. Through this, the electronic device 100 may provide the user with content 131 based on an enlarged image 121 that is enlarged throughout, rather than content 131 based on an enlarged image 121 in which only an image of some area is enlarged.

To this end, the electronic device 100 may calculate an enlargement ratio between the area of the image 111 and the area of the enlarged image 121 and convert the resolution of the acquired plurality of input images by using the calculated enlargement ratio. In an embodiment, when the resolution of the image 111 displayed on the display 110 is a first resolution, the electronic device 100 may convert the resolution of a plurality of input images acquired to display the image 111 to have a second resolution obtained by multiplying the first resolution by the enlargement ratio. In an embodiment, when the resolution of the acquired plurality of input images is the first resolution, the electronic device 100 may convert the plurality of input images into a plurality of converted images having the second resolution.

In an embodiment, the electronic device 100 may determine a plurality of selected images to be displayed on a plurality of enlarged pixels included in the enlarged image 121 from among the plurality of converted images having the second resolution. The electronic device 100 may determine, as a plurality of selected images, images corresponding to a plurality of enlarged pixels having the first resolution but different areas from among the plurality of converted images having the second resolution.

In an embodiment, the electronic device 100 may display the determined plurality of selected images on a plurality of pixels, which respectively correspond to the plurality of enlarged pixels, through the display 110. Through this, the enlarged image 121, which is obtained by enlarging, by the optical layer 120, the image 111 displayed on the display 110, may appear as if the enlarged image 121 is an image having a second resolution, rather than an image in which only a portion of an image having a first resolution is enlarged.

In an embodiment, the electronic device 100 may provide the user with the content 131 using an enlarged image 121 that is provided by enlarging an image 111 including a plurality of selected images determined from among a plurality of input images having a second resolution.

Through this, the electronic device 100 may provide the user with the content 131 having a high resolution by displaying the image 111 by using a plurality of sub-displays each having a high resolution. In an embodiment, the electronic device 100 may use the optical layer 120 to prevent a bezel area between the plurality of sub-displays from being visible to the user.

Furthermore, the electronic device 100 may provide the user with content 131 using an enlarged image 121 that is naturally enlarged to appear as if the resolution increases, rather than providing content 131 using an enlarged image 121 in which only a portion of the image is enlarged to prevent the bezel area from being visible to the user, thereby preventing the user from experiencing a sense of incongruity.

Effects obtainable from the present disclosure are not limited to the aforementioned technical effects, and other effects not mentioned will be clearly understood by a person skilled in the art to which the present disclosure pertains from the following description.

Hereinafter, the electronic device 100 of the present disclosure and the operating method of the electronic device 100 will be described in detail.

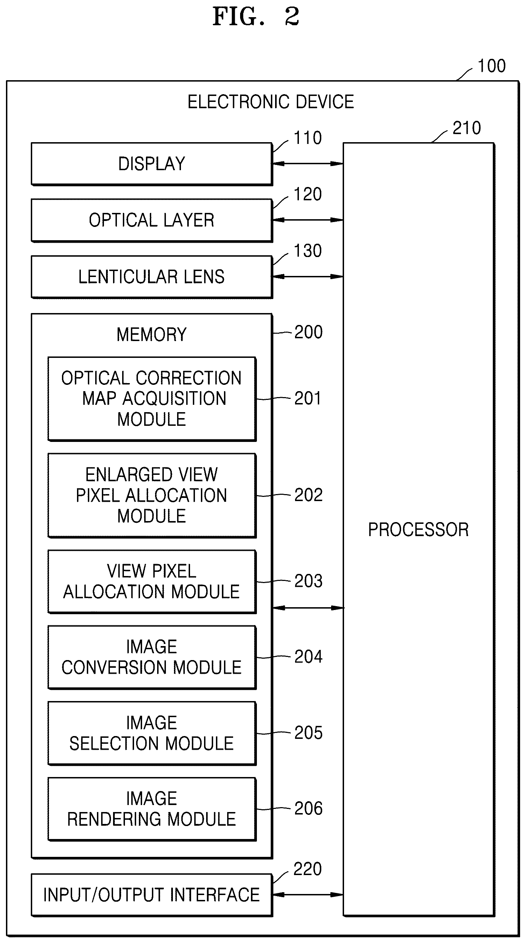

FIG. 2 is a block diagram for explaining a configuration of an electronic device according to an embodiment of the present disclosure.

Referring to FIGS. 1 and 2, an electronic device 100 may include a display 110, an optical layer 120, a lenticular lens 130, memory 200, at least one processor 210, and an input/output interface 220. However, not all of the elements illustrated in FIG. 2 are essential elements of the electronic device 100. The electronic device 100 may be implemented with more elements than those illustrated in FIG. 2, or may be implemented with fewer elements.

In an embodiment, the display 110, the optical layer 120, the lenticular lens 130, the memory 200, the at least one processor 210, and the input/output interface 220 may be electrically and/or physically connected to each other.

In an embodiment, the display 110 may include any one of a liquid crystal display, an organic light-emitting diode display, and an inorganic light-emitting diode display. However, the present disclosure is not limited thereto, and the display 110 may include another type of display capable of displaying an image 111. In an embodiment, the display 110 may include a plurality of sub-displays. Each of the plurality of sub-displays may display a sub-image, and the image 111 may be displayed using a plurality of sub-images displayed through the plurality of sub-displays.

In an embodiment, the optical layer 120 may be a layer including an optical fiber. In an embodiment, the optical layer 120 may include, but is not limited to, glass or a polymer. In an embodiment, the optical layer 120 may transmit light provided to the optical layer 120 to the outside of the optical layer 120. In an embodiment, light incident on the optical layer 120 may propagate through a total reflection phenomenon and be transmitted to the outside of the optical layer 120. In an embodiment, a direction in which light incident on the optical layer 120 propagates may be determined by the shape of the optical layer 120 or optical characteristics, such as the refractive index of a material included in the optical layer 120.

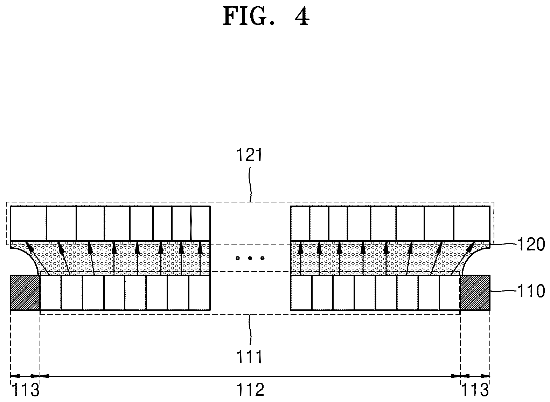

In an embodiment, the optical layer 120 may be arranged on the display 110. The optical layer 120 may transmit the image 111, displayed on the display 110 and transmitted to the optical layer 120, to the outside of the optical layer 120. In an embodiment, the image 111 provided to the optical layer 120 may be enlarged and provided as an enlarged image 121 to the outside of the optical layer 120, due to the shape of the optical layer 120 or optical characteristics, such as the refractive index of a material included in the optical layer 120. The optical layer 120 will be described below with reference to FIGS. 4 to 6.

In an embodiment, the lenticular lens 130 may include a plurality of lenses each having a convex shape. In an embodiment, each of the plurality of lenses included in the lenticular lens 130 may have a cylindrical shape having a hemispherical cross-section. In an embodiment, the lenticular lens 130 may have an upper surface in which a convex shape is repeated by the plurality of lenses, and a lower surface that is flat. In this case, the lenticular lens 130 may be formed of one layer or may be formed of two or more layers. The lenticular lens 130 may include a base layer for arranging a plurality of lenses, and a lens layer including a plurality of lenses arranged on the base layer. In an embodiment, a flat surface of the lens layer may be a surface in contact with the base layer.

In an embodiment, the lenticular lens 130 may refract light provided to the lenticular lens 130. The path of light passing through the lenticular lens 130 may be refracted and changed by the lenticular lens 130. In an embodiment, the path along which light provided to the lenticular lens 130 is refracted may vary depending on the shape or size of the plurality of lenses included in the lenticular lens 130, the refractive index of the material included in the plurality of lenses, etc.

In an embodiment, when each of the plurality of lenses has a cylindrical shape having a hemispherical cross-section, the diameter of the hemispherical cross-section may be referred to as a pitch. However, the pitch is a criterion for dividing one lens into a plurality of view areas, and the present disclosure is not limited thereto. In an embodiment, the distance between the center points of two adjacent lenses may also be referred to as the pitch.

In an embodiment, one pitch may be divided into a plurality of view areas. The plurality of view areas may be areas where light provided to the plurality of view areas is refracted in different directions. In an embodiment, a plurality of pixel images or a plurality of enlarged pixel images respectively provided to the plurality of view areas may be refracted along different paths by the lens.

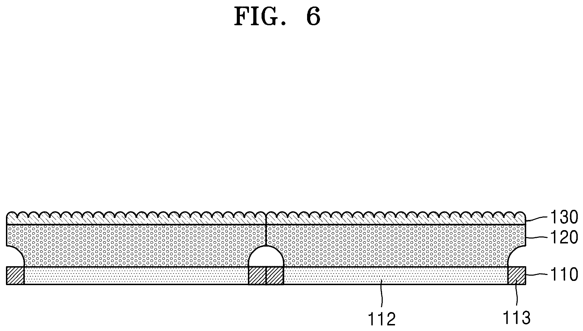

In an embodiment, each of the plurality of lenses may include a plurality of view areas. In an embodiment, the plurality of pixel images or the plurality of enlarged pixel images respectively provided to the plurality of view areas may be refracted in different directions by the lens included in the lenticular lens 130, and thus may be provided as a plurality of view images to a user positioned at different views. The optical layer 120 will be described below with reference to FIGS. 6, 7A, and 11A.

In an embodiment, instructions, a data structure, and a program code readable by the at least one processor 210 may be stored in the memory 200. In an embodiment, one or more memory 200 may be provided. In disclosed embodiments, operations performed by the at least one processor 210 may be implemented by executing the instructions or codes of a program stored in the memory 200.

In an embodiment, the memory 200 may include at least one of a flash memory type, a hard disk type, a multimedia card micro type, a card type memory (for example, a secure digital (SD) or extreme digital (XD) memory), a random access memory (RAM), a static random access memory (SRAM), a read-only memory (ROM), an electrically erasable programmable ROM (EEPROM), a programmable ROM (PROM), mask ROM, flash ROM, a hard disk driver (HDD), or a solid state driver (SSD).

The memory 200 may store instructions or program codes for performing functions or operations of the electronic device 100. The instructions, algorithm, data structure, program code, and application program stored in the memory 200 may be implemented in, for example, programming or scripting languages such as C, C++, Java, assembler, and the like.

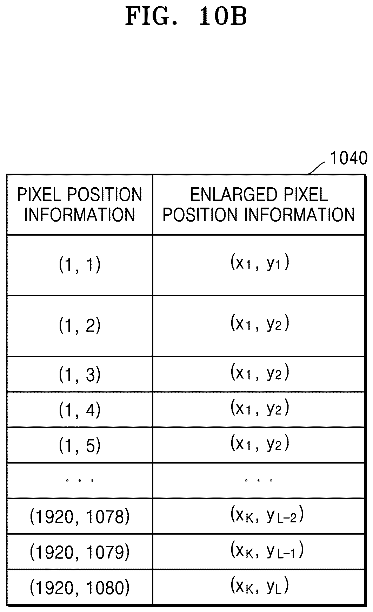

In an embodiment, the memory 200 may store an optical correction map acquisition module 201, an enlarged view pixel allocation module 202, a view pixel allocation module 203, an image conversion module 204, an image selection module 205, and an image rendering module 206. However, not all of the modules illustrated in FIG. 2 are essential modules. The memory 200 may store more or fewer modules than the modules illustrated in FIG. 2. In addition, the memory 200 may store an optical correction map 1040 (see FIG. 10B) to be described below.

In an embodiment, a 'module' included in the memory 200 may refer to a unit that processes a function or operation performed by the at least one processor 210. The 'module' included in the memory 200 may be implemented as software, such as instructions, an algorithm, a data structure, or a program code.

In an embodiment, the optical correction map acquisition module 201 may be configured with instructions or program codes related to an operation or function of acquiring the optical correction map 1040 (see FIG. 10B) that includes information about the positions of a plurality of pixels included in the image 111 displayed on the display 110 and information about the positions of a plurality of enlarged pixels included in the enlarged image 121 enlarged by the optical layer 120.

In an embodiment, the at least one processor 210 may obtain the optical correction map 1040 by executing instructions or program codes of the optical correction map acquisition module 201. The at least one processor 210 may obtain the optical correction map 1040 through a communication interface by executing instructions or program codes of the optical correction map acquisition module 201.

In an embodiment, the optical correction map 1040 may be a map including the information about the positions of the plurality of pixels included in the image 111 and the information about the positions of the plurality of enlarged pixels included in the enlarged image 121, which are calculated by comparing the image 111 displayed through the display 110 with the enlarged image 121 provided through the optical layer 120. In an embodiment, the optical correction map 1040 may be a map pre-calculated using the resolution of the image 111 displayed through the display 110, the positional relationship between the display 110 and the optical layer 120, the optical characteristics of the optical layer 120, the shape of the optical layer 120, etc.

In an embodiment, the optical correction map acquisition module 201 may be configured with instructions or program codes related to an operation or function of calculating the area of each of the plurality of pixels and the area of each of the plurality of enlarged pixels based on the information about the positions of the plurality of pixels and the information about the positions of the plurality of enlarged pixels, included in the acquired optical correction map 1040. However, the present disclosure is not limited thereto, and the area of each of the plurality of pixels and the area of each of the plurality of enlarged pixels may be pre-calculated and included in the optical correction map 1040.

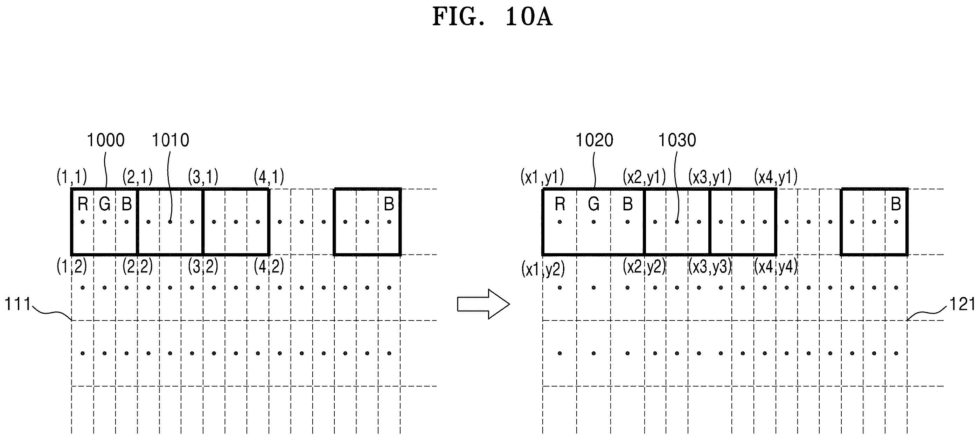

In an embodiment, the optical correction map acquisition module 201 may be configured with instructions or program codes related to an operation or function of calculating the center point of each of the plurality of pixels and the center point of each of the plurality of enlarged pixels based on the information about the positions of the plurality of pixels and the information about the positions of the plurality of enlarged pixels, included in the acquired optical correction map 1040. In an embodiment, the center point of each of the plurality of pixels and the center point of each of the plurality of enlarged pixels may be pre-calculated and included in the optical correction map 1040. The optical correction map 1040 will be described below with reference to FIGS. 10A and 10B.

In an embodiment, the enlarged view pixel allocation module 202 may be configured with instructions or program codes related to an operation or function of classifying the plurality of enlarged pixels as a plurality of enlarged view pixels on which a plurality of enlarged pixel images will be displayed, based on the information about the positions of the plurality of enlarged pixels included in the enlarge image 121 and a plurality of view areas included in the lenticular lens 130.

In an embodiment, an enlarged view pixel may be a group of enlarged pixels for displaying an enlarged pixel image of one of the plurality of enlarged pixels. In an embodiment, a plurality of enlarged pixels included in one enlarged view pixel may display an enlarged pixel image corresponding to a view image provided to a user in one view. In an embodiment, the resolution of the enlarged view pixel may refer to the resolution of the enlarged pixel image displayed on the enlarged view pixel. As the number of enlarged pixels included in the enlarged view pixel increases, the resolution of the enlarged view pixel may increase.

In an embodiment, each of the plurality of lenses included in the lenticular lens 130 may be divided into a plurality of view areas. In an embodiment, the shape of the plurality of view areas included in each of the plurality of lenses may be determined based on at least one of the shape or size of the plurality of lenses included in the lenticular lens 130 or the refractive index of a material included in the plurality of lenses. In an embodiment, the enlarged view pixel allocation module 202 may be configured with instructions or program codes related to an operation or function of classifying or allocating a plurality of enlarged pixels as a plurality of enlarged view pixels respectively corresponding to a plurality of view areas, based on the arrangement of the plurality of enlarged pixels and the arrangement of the plurality of view areas.

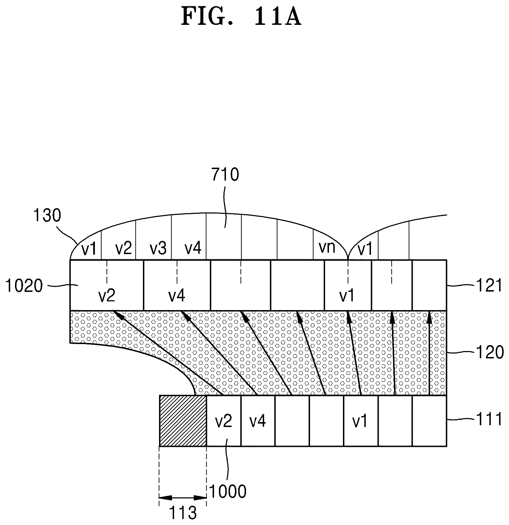

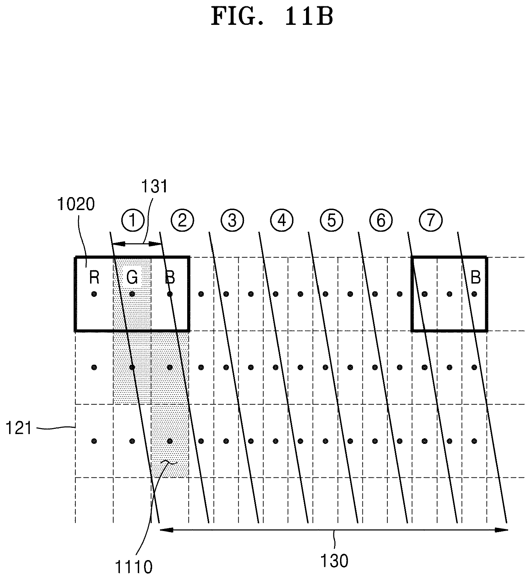

In an embodiment, the at least one processor 210 may execute instructions or program codes of the enlarged view pixel allocation module 202 to classify the plurality of enlarged pixels as a plurality of enlarged view pixels. The operation of allocating or classifying the plurality of enlarged pixels as a plurality of enlarged view pixels will be described below with reference to FIGS. 11A and 11B.

In an embodiment, the view pixel allocation module 203 may be configured with instructions or program codes related to an operation or function of classifying a plurality of pixels as a plurality of view pixels respectively corresponding to a plurality of enlarged view pixels, based on the optical correction map 1040.

In an embodiment, the acquired optical correction map 1040 includes information regarding the correspondence between a plurality of pixels included in the image 111 and a plurality of enlarged pixels included in the enlarged image 121 enlarged by the optical layer 120. In an embodiment, the view pixel allocation module 203 may be configured with instructions or program codes related to an operation or function of classifying a plurality of pixels as a plurality of view pixels respectively corresponding to a plurality of enlarged view pixels and classified to respectively correspond to a plurality of view areas.

In an embodiment, the at least one processor 210 may execute instructions or program codes of the view pixel allocation module 203 to classify a plurality of pixels as a plurality of view pixels respectively corresponding to a plurality of enlarged view pixels. Hereinafter, the operation of allocating or classifying a plurality of pixels as a plurality of view pixels respectively corresponding to a plurality of enlarged view pixels will be described below with reference to FIGS. 11A and 11B.

In an embodiment, the image conversion module 204 may be configured with instructions or program code related to an operation or function of converting the resolution of the acquired plurality of input images. In an embodiment, the image conversion module 204 may include a model for performing upscaling to increase the resolution of a plurality of input images. **In** an embodiment, the image conversion module 204 may include an interpolation algorithm, such as Nearest-Neighbor Interpolation, Bilinear Interpolation, or Bicubic Interpolation.

However, the present disclosure is not limited thereto, and the image conversion module 204 may also include an artificial intelligence model trained to receive images and infer images having increased resolution. **In** an embodiment, the artificial intelligence model included in the image conversion module 204 may include a plurality of neural network layers. Each of the neural network layers has a plurality of weight values, and the calculation of the current neural network layer may be performed through the calculation results of the previous neural network layer and the calculation of the plurality of weight values. Examples of artificial intelligence models include a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), a Deep Q-Network, a Generative Adversarial Network (GAN), a Conditional Generative Adversarial Network (CGAN), a Deep Convolutional Generative Adversarial Network (DCGAN), and a Variational Auto Encoder (VAE). The artificial intelligence model included in the image conversion module 204 of the present disclosure are not limited to the examples described above.

In an embodiment, the at least one processor 210 may convert the resolutions of a plurality of input images by executing instructions or program codes of the image conversion module 204. In an embodiment, the at least one processor 210 may use the enlargement ratio between the area of the image 111 calculated using the acquired optical correction map 1040 and the area of the enlarged image 121 to convert the resolution of the plurality of input images to be increased by the enlargement ratio. In an embodiment, the at least one processor 210 may convert the plurality of input images into a plurality of converted images having a high resolution by executing instructions or program codes of the image conversion module 204.

In an embodiment, the image selection module 205 may be configured with instructions or program code related to an operation or function of determining a plurality of selected images corresponding to each of the plurality of enlarged view pixels from among the plurality of converted images having a resolution converted by the image conversion module 204. In an embodiment, each of the plurality of input images may an image corresponding to a plurality of enlarged view pixels. Each of the plurality of converted images may be an image corresponding to a plurality of enlarged view pixels.

In an embodiment, the resolution of each of the plurality of converted images may be higher than the resolution of each of the plurality of enlarged view pixels. In an embodiment, the resolution of each of the plurality of converted images may be higher than the resolution of an enlarged pixel image displayed on any one enlarged view pixel.

In an embodiment, the image selection module 205 may be configured with instructions or program code related to an operation or function of determining a selected image corresponding to the resolution of each enlarged view pixel of each converted image. In an embodiment, the image selection module 205 may be configured with instructions or program code related to an operation or function of determining a selected image corresponding to the resolution of each enlarged pixel image of each converted image. In an embodiment, the resolution of the selected image may be the same as the resolution of the enlarged view pixel. The resolution of the selected image may be the same as the resolution of the enlarged pixel image.

In an embodiment, at least one processor 210 may determine a plurality of selected images corresponding to each of the plurality of enlarged view pixels from among the plurality of converted images having a resolution converted by the image conversion module 204, by executing instructions or program codes of the image selection module 205.

In an embodiment, the image rendering module 206 may be configured with instructions or program codes related to an operation or function of rendering the acquired plurality of input images to each of a plurality of view pixels classified through the view pixel allocation module 203. In an embodiment, the image rendering module 206 may be configured with instructions or program codes related to an operation or function of rendering a plurality of input images to each of a plurality of view pixels and displaying the rendered input images as the image 111 on each of the plurality of view pixels.

In an embodiment, the image rendering module 206 may be configured with instructions or program codes related to an operation or function of preprocessing the acquired plurality of input images. The image rendering module 206 may render and display the preprocessed plurality of input images to each of the plurality of view pixels.

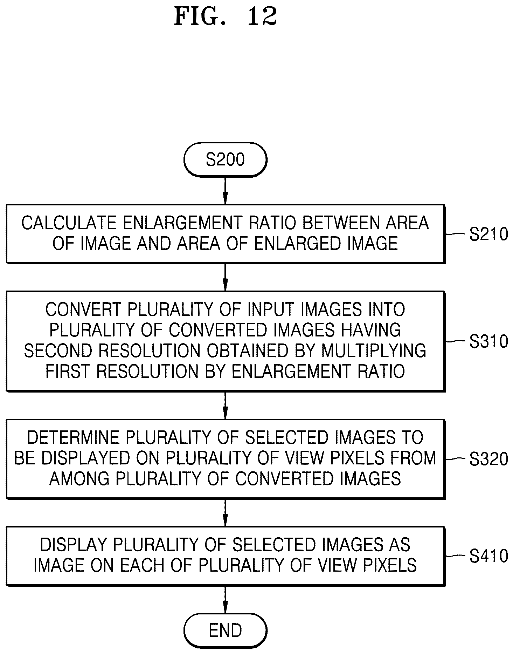

In an embodiment, the image rendering module 206 may be configured with commands or program codes related to an operation or function of rendering a plurality of selected images determined through the image conversion module 204 and the image selection module 205 to each of a plurality of view pixels classified through the view pixel allocation module 203. In an embodiment, the image rendering module 206 may be configured with instructions or program codes related to an operation or function of rendering a plurality of selected images to each of a plurality of view pixels and displaying the rendered images as the image 111 on each of the plurality of view pixels. Hereinafter, the operations of the image conversion module 204, the image selection module 205, and the image rendering module 206 will be described below with reference to FIGS. 12 to 15B.

In addition, although FIG. 2 illustrates that a plurality of modules for performing operations of the electronic device 100 are stored separately in the memory 200, the present disclosure is not limited thereto. Some of the modules illustrated in FIG. 2 may be stored as a single module. In addition, each module illustrated as one module in FIG. 2 may be divided into two or more modules and stored.

In an embodiment, the at least one processor 210 may include, but is not limited to, at least one of a central processing unit, a microprocessor, a graphics processing unit, an application processor, application specific integrated circuits (ASICs), digital signal processors (DSPs), digital signal processing devices (DSPDs), programmable logic devices (PLDs), field programmable gate arrays (FPGAs), a neural processing unit, or an artificial intelligence (AI) dedicated processor designed with a hardware structure specialized for training and processing an Al model.

In an embodiment of the present disclosure, when one or a plurality of processors included in the at least one processor 210 are Al-only processors, the AI-only processors may be designed in a hardware structure specialized for processing a specific Al model.

In an embodiment of the present disclosure, the at least one processor 210 may include circuitry such as a system on chip (SoC) or an integrated circuit (IC).

In an embodiment of the present disclosure, the at least one processor 210 may execute various types of modules stored in the memory 200. The at least one processor 210 may execute at least one instruction that constitutes the various types of modules stored in the memory 200. By executing a program or at least one instruction stored in the memory 200, the at least one processor 210 may process data according to predefined operation rules or an Al model.

In an embodiment of the present disclosure, the at least one processor 210 may execute at least one module among the optical correction map acquisition module 201, the enlarged view pixel allocation module 202, the view pixel allocation module 203, the image conversion module 204, the image selection module 205, or the image rendering module 206, stored in the memory 200.

In an embodiment of the present disclosure, the at least one processor 210 may include a plurality of processors. In an embodiment of the present disclosure, at least one module among the optical correction map acquisition module 201, the enlarged view pixel allocation module 202, the view pixel allocation module 203, the image conversion module 204, the image selection module 205, or the image rendering module 206, stored in the memory 200, may be executed by any one of the plurality of processors.

In an embodiment, the input/output interface 220 may receive a plurality of input images, respectively corresponding to a plurality of views, from a peripheral electronic device or the like, under the control of the at least one processor 210. In an embodiment, the plurality of input images may include still images or moving images. The input/output interface 220 may receive audio (e.g., a voice signal, a music signal, etc.) and additional information, etc., from an external device or the like, under the control of the at least one processor 210. The input/output interface 220 may include at least one of a High-Definition Multimedia Interface (HDMI) port, a component jack, a PC port, or a USB port. However, the present disclosure is not limited thereto, and the input/output interface 220 may include various types of interfaces capable of receiving a plurality of input images from peripheral electronic devices.

In an embodiment, the electronic device 100 may further include a communication interface. In an embodiment, the communication interface may perform data communication with an external server under the control of the at least one processor 210. Furthermore, the communication interface may perform data communication not only with the external server but also with other peripheral electronic devices. The communication interface may perform data communication with a server or other peripheral electronic devices by using at least one of the following data communication methods: wired LAN, wireless LAN, Wi-Fi, Bluetooth, Zigbee, Wi-Fi Direct, infrared data association (IrDA), Bluetooth Low Energy (BLE), Near Field Communication (NFC), Wireless Broadband Internet (Wibro), World Interoperability for Microwave Access (WiMAX), Shared Wireless Access Protocol (SWAP), Wireless Gigabit Alliance (WiGig), and RF communication.

In an embodiment, the at least one processor 210 may receive a pre-calculated optical correction map from an external server or peripheral electronic devices through the communication interface.

Furthermore, the present disclosure is not limited thereto, and the at least one processor 210 may also receive a plurality of input images from an external server (e.g., a web server or a cloud service) through the communication interface.

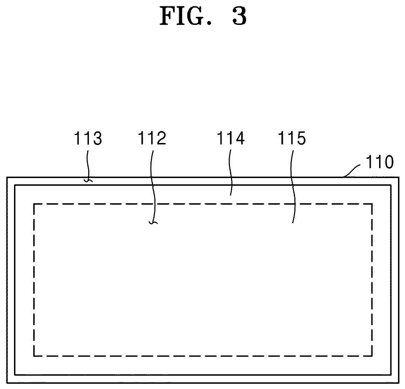

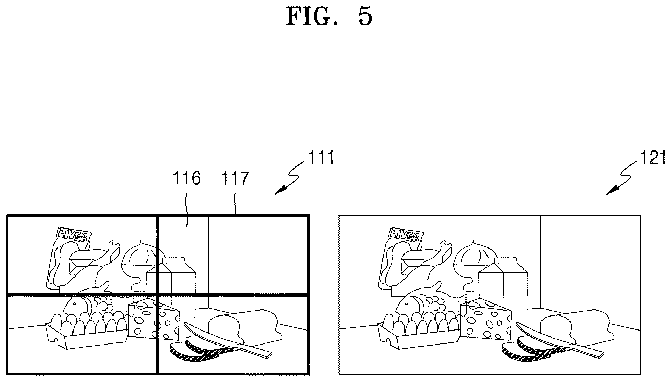

FIG. 3 is a view for explaining a bezel area and a display area included in a display according to an embodiment of the present disclosure. FIG. 4 is a view for explaining an enlarged image provided through an optical layer according to an embodiment of the present disclosure. FIG. 5 is a view for explaining an image displayed through a display and an enlarged image provided through an optical layer, according to an embodiment of the present disclosure. Hereinafter, components identical to those described with reference to FIGS. 1 and 2 are assigned the same reference numerals, and redundant descriptions thereof are omitted.

In an embodiment, referring to FIGS. 1 and 3, FIG. 3 illustrates a display 110. While FIG. 3 illustrates a display 110 having a quadrangular shape, the present disclosure is not limited thereto. In an embodiment, the display 110 may have various shapes, such as a circular shape.

In an embodiment, the display 110 may include a display area 112 where an image 111 is displayed and a bezel area 113 adjacent to the display area 112. In an embodiment, the bezel area 113 may be an area surrounding the display area 112. The bezel area 113 may be an area for protecting the display area 112 from external impact. The bezel area 113 may be an area in which a circuit for displaying the image 111 in the display area 112 is arranged.

In an embodiment, the display area 112 may include a plurality of pixels. In an embodiment, the resolution of the image 111 displayed in the display area 112 may be determined based on the number of the plurality of pixels. In an embodiment, the resolution of the image 111 may refer to the resolution of the plurality of pixels.

In an embodiment, the plurality of pixels may include a plurality of first pixels 114 adjacent to the bezel area 113 and a plurality of second pixels 115 spaced apart from the bezel area 113. In an embodiment, the plurality of second pixels 115 may be positioned in a central portion of the display area 112, and the plurality of first pixels 114 may be positioned in a peripheral portion of the display area 112.

In an embodiment, although FIG. 3 illustrates that the bezel area 113 included in the display 110 is positioned on all four sides of the display 110, the present disclosure is not limited thereto. In an embodiment, the bezel area 113 may be positioned on at least one side of the display 110.

Referring to FIGS. 1, 3, and 4, in an embodiment, an optical layer 120 may be arranged on the display 110. In an embodiment, the image 111 displayed on the display 110 may be provided to the optical layer 120. The image 111 provided to the optical layer 120 may be transmitted within the optical layer 120 along the shape of the optical layer 120. In an embodiment, the image 111 provided to the optical layer 120 may be transmitted along the optical layer 120 and then provided to the outside of the optical layer 120.

In an embodiment, the image provided to the optical layer 120 may be enlarged and transmitted to the outside of the optical layer 120 depending on the shape of the optical layer 120. In this case, the optical layer 120 may have a shape in which a lower surface adjacent to the display 110 is relatively narrow and an upper surface facing the lower surface is relatively wide. In an embodiment, the lower surface of the optical layer 120 may overlap the display area 112 of the display 110, and the upper surface of the optical layer 120 may overlap the display area 112 and the bezel area 113.

Through this, the image 111 provided through the lower surface of the optical layer 120 and overlapping the display area 112 may be enlarged by the optical layer 120 and provided, through the upper surface of the optical layer 120, to the outside of the optical layer 120 as an enlarged image 121 overlapping the display area 112 and the bezel area 113. In an embodiment, the area of the enlarged image 121 may be greater than the area of the image 111.

In an embodiment, of the image 111, an image displayed on the plurality of first pixels 114 adjacent to the bezel area 113 may be enlarged by the optical layer 120 to overlap the display area 112 and the bezel area 113. Of the image 111, an image displayed on the plurality of second pixels 115 may be provided by the optical layer 120 to overlap the display area 112.

Referring to FIGS. 1, 3, and 5, in an embodiment, the display 110 may include a plurality of sub-displays. Each of the plurality of sub-displays may include a sub-display area 116 on which a sub-image is displayed and a sub-bezel area 117 adjacent to the sub-display area 116.

In an embodiment, the display 110 may display the image 111 by combining a plurality of sub-images displayed on the plurality of sub-displays. In this case, the image 111 may include an area where the sub-image is not displayed due to the sub-bezel area 117.

In an embodiment, the optical layer 120 may be arranged to overlap the plurality of sub-displays. In an embodiment, the optical layer 120 may be arranged to overlap a plurality of sub-display areas and a plurality of sub-bezel areas. Accordingly, the enlarged image 121 enlarged through the optical layer 120 may overlap the plurality of sub-displays without any area where the sub-image is not displayed due to the sub-bezel area 117.

In an embodiment, although FIG. 5 illustrates that the display 110 includes four sub-displays, the present disclosure is not limited thereto. The display 110 may include three or fewer sub-displays or five or more sub-displays. Also, although FIG. 5 illustrates that the optical layer 120 provides an enlarged image 111 that overlaps a plurality of sub-bezel areas included in the border of each of the four sub-displays, the present disclosure is not limited thereto. In an embodiment, depending on the shape of the optical layer 120, the enlarged image 121 may overlap only some of the plurality of sub-bezel areas included in the plurality of sub-displays.

FIG. 6 is a view for explaining an arrangement of a display, an optical layer, and a lenticular lens according to an embodiment of the present disclosure. Hereinafter, components identical to those described with reference to FIG. 4 are assigned the same reference numerals, and redundant descriptions thereof are omitted.

Referring to FIGS. 1, 3, and 6, in an embodiment, the lenticular lens 130 may be arranged on the optical layer 120. In an embodiment, the lower surface of the lenticular lens 130 adjacent to the optical layer 120 may be flat, and the upper surface facing the lower surface may have a convex shape in which a plurality of lenses are repeated. However, the present disclosure is not limited thereto, and the lower surface of the lenticular lens 130 may also have various surfaces depending on the shape of the optical layer 120, etc.

In an embodiment, an enlarged image 121 provided through the optical layer 120 may be provided to the lenticular lens 130. In an embodiment, the enlarged image 121 provided to the lenticular lens 130 may be refracted in different directions through a plurality of lenses included in the lenticular lens 130 and provided as a plurality of view images from different views. In an embodiment, the electronic device 100 may provide the content 131 to the user through the plurality of view images respectively provided from a plurality of different views.

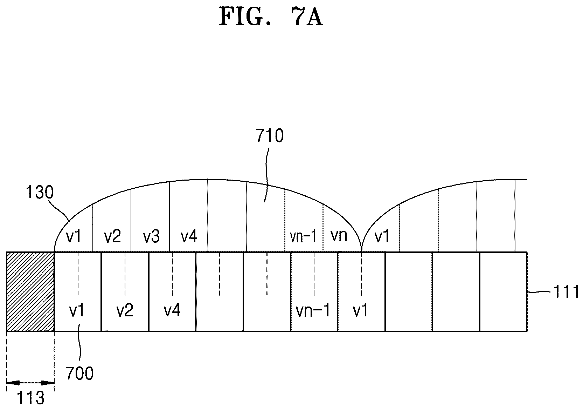

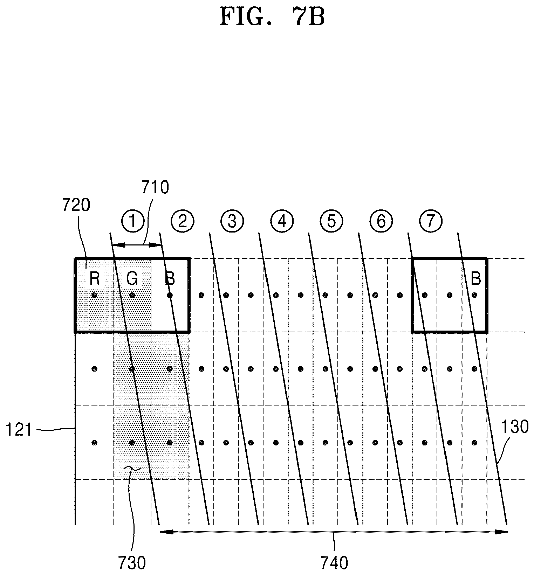

FIG. 7A is a view for explaining an operation of classifying a plurality of pixels, included in an image displayed through a display, as a plurality of view pixels, according to an embodiment of the present disclosure. FIG. 7B is a view for explaining a relationship between a plurality of enlarged view pixels and a plurality of view areas included in a lenticular lens, according to an embodiment of the present disclosure.

Referring to FIGS. 1, 4, and 7A, in an embodiment, FIG. 7A illustrates that a plurality of pixels 700 included in an image 111 are classified as a plurality of view pixels to display a plurality of pixel images corresponding to a plurality of view images provided through a lenticular lens 130 so as to correspond to a plurality of view areas 710.

In an embodiment, FIG. 7A illustrates that the image 111 displayed through the display 110 is provided to the lenticular lens 130, rather than the enlarged image 121 enlarged by the optical layer 120 being provided through the lenticular lens 130. In an embodiment, FIG. 7A illustrates that the electronic device 100 classifies the plurality of pixels 700 included in the image 111 as a plurality of view pixels without considering that the image is enlarged by the optical layer 120.

In an embodiment, the lenticular lens 130 may include a plurality of lenses, and each of the plurality of lenses may include a plurality of view areas 710. In an embodiment, although FIG. 7A illustrates that one lens includes n view areas 710, the present disclosure is not limited thereto. The number of view areas included in one lens may vary depending on the shape of the lens, the refractive index of the lens, the size of the lens, etc.

In an embodiment, for convenience of explanation, FIG. 7A illustrates that the first view is v1, the second view is v2, the third view is v3, the (n-1)th view is vn-1, and the nth view is vn. One lens is illustrated as including n view areas 710 respectively corresponding to a first view through an nth view. Although FIG. 7A illustrates n view areas 710 included in one lens, each of the plurality of lenses included in the lenticular lens 130 may include n view areas. In an embodiment, the arrangement of the n view areas 710 included in one lens may be repeated in the plurality of lenses. In an embodiment, n may be a natural number greater than 1.

In an embodiment, a plurality of pixels respectively corresponding to the n view areas 710 from among the plurality of pixels 700 may be determined, and a plurality of pixels classified as corresponding to the same view area may be classified as view pixels.

In an embodiment, the plurality of pixels 700 may be classified as a plurality of view pixels respectively corresponding to the n view areas 710. In this case, the plurality of pixels 700 may be classified as n view pixels. In an embodiment, each view pixel may include a plurality of pixels corresponding to one of the n view areas 710 of the lenticular lens 130. In an embodiment, as the n view areas 710 included in the lenticular lens 130 are repeated according to the plurality of lenses, classified n view pixels may also be repeated.

In this case, there may be various methods for determining a pixel corresponding to each of the n view areas 710 from among the plurality of pixels 700. In an embodiment, among at least one view area overlapping one pixel, a view area having the largest overlapping area with one pixel may be determined as a view area corresponding to the one pixel. In addition, the center point of one pixel may be calculated, and a view area overlapping the center point may be determined as a view area corresponding to the one pixel. However, the present disclosure is not limited to any one method. Hereinafter, for convenience of explanation, the case where the center point of one pixel is calculated and a view area overlapping the center point is determined as a view area corresponding to the one pixel is explained.

Referring to FIG. 7A, in the case of a pixel overlapping the third and fourth view areas from among a plurality of pixels, the center point of the pixel overlaps the fourth view area, and thus the pixel is classified as a view pixel overlapping the fourth view area.

In an embodiment, the at least one processor 210 may display a pixel image for providing a view image to a view area of the lenticular lens 130 corresponding to each of the plurality of view pixels. In an embodiment, the view image is an image provided to a user in any one of n views, and the pixel image is an image that may be provided to a view area of any one of n views, refracted through the lenticular lens 130, and provided as a view image in the corresponding view. In an embodiment, the at least one processor 210 may control the display 110 to display a pixel image corresponding to each of the plurality of view pixels based on acquired input images.

In this case, the acquired input images may be images acquired by photographing a real object through cameras positioned at n views. However, the present disclosure is not limited thereto, and the acquired input images may be images generated to provide images of an object in n views. In addition, the acquired input images may be corresponding images in views less or greater than n views, and the at least one processor 210 may generate and use n view images as needed.

Referring to FIGS. 4, 6, 7A, and 7B, in an embodiment, FIG. 7B illustrates a lenticular lens 130 and an enlarged image 121 enlarged by the optical layer 120 in the case where a pixel image corresponding to each of the plurality of view pixels classified in FIG. 7A by considering that the image 111 is not enlarged due to the absence of the optical layer 120 is displayed.

In an embodiment, a plurality of enlarged pixels 720 included in the enlarged image 121 may be classified as a plurality of enlarged view pixels 730 corresponding to a plurality of view pixels, respectively. In an embodiment, the plurality of enlarged pixels 720 may correspond one-to-one to the plurality of pixels 700. In an embodiment, a group including a plurality of enlarged pixels corresponding to a plurality of pixels included in a view pixel may be classified as an enlarged view pixel. The plurality of enlarged pixels included in the enlarged view pixel may correspond to a plurality of pixels included in a view pixel corresponding to the enlarged view pixel.

In an embodiment, a pixel image displayed on the view pixel may be enlarged by the optical layer 120 and enlarged into an enlarged pixel image displayed on the enlarged view pixel. When the electronic device 100 includes the optical layer 120, an enlarged pixel image, rather than a pixel image, may be provided to the lenticular lens 130.

In an embodiment, for convenience of explanation, FIG. 7B illustrates that one lens includes seven view areas 710. In an embodiment, each of the view areas 710 from 1 to 7 may be an area in which a pitch 740 of one lens is divided into seven. In an embodiment, the lenticular lens 130 may be arranged slanted compared to the plurality of pixels 700 included in the image 111 or the plurality of enlarged pixels 720 included in the enlarged image 121. In an embodiment, being slanted may mean that each view area does not overlap a plurality of pixels 700 or a plurality of enlarged pixels 720 located in a certain row or a certain column, but overlaps a plurality of pixels 700 or a plurality of enlarged pixels 720 located in different rows and columns.

In an embodiment, the hatched area in FIG. 7B may be an enlarged view pixel corresponding to a view pixel classified to correspond to the first view area. In this case, the view pixel classified to correspond to the first view area may include at least one pixel adjacent to the bezel area 113 of the display 110. Accordingly, the enlarged view pixel obtained by enlarging the view pixel classified to correspond to the first view area may be enlarged toward the bezel area 113, and thus, the area of the view pixel may be different from the area of the enlarged view pixel.

Accordingly, an enlarged pixel image displayed on the enlarged view pixel may not correspond to the first view area. Referring to FIG. 7B, the hatched area includes an enlarged pixel that does not overlap the first view area. Therefore, even when a pixel image is displayed on the view pixel of the display 110 to provide a view image corresponding to the first view area through the first view area, the pixel image may be enlarged by the optical layer 120 and an enlarged pixel image may be provided to a view area other than first view area. In this case, a desired view image may not be provided depending on the view in which the user is located, and thus, the user's visibility may be reduced.

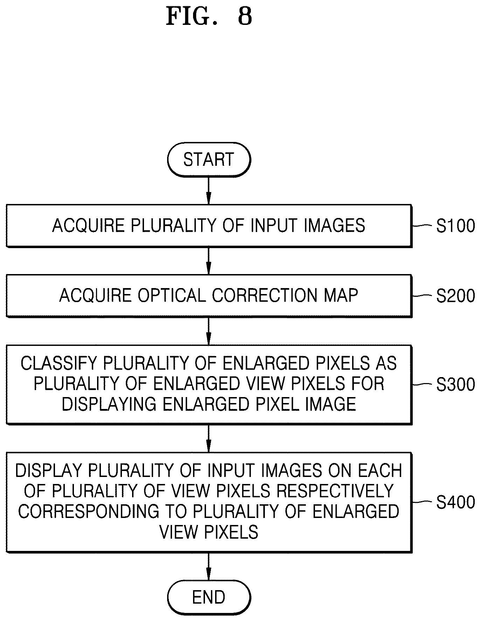

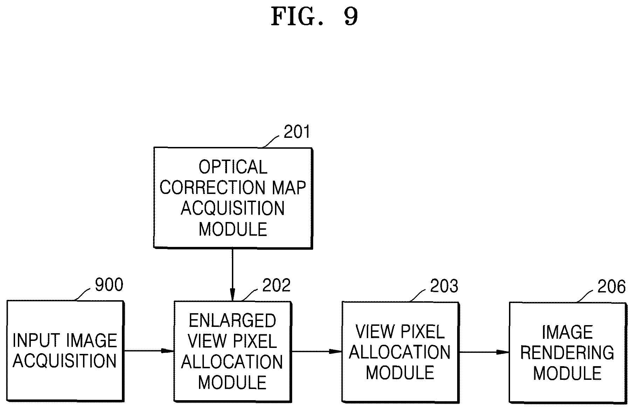

FIG. 8 is a flowchart for explaining an operation of an electronic device according to an embodiment of the present disclosure. FIG. 9 is a view for explaining an operation of an electronic device including an optical layer according to an embodiment of the present disclosure.

Referring to FIGS. 1, 2, and 8, in an embodiment, FIG. 8 illustrates an operating method of an electronic device 100 according to the present disclosure.

In an embodiment, the operating method of the electronic device 100 may include acquiring a plurality of input images respectively corresponding to a plurality of views (S100).

Referring to FIGS. 2, 8, and 9, in an embodiment, in the acquiring of the plurality of input images (S100), the at least one processor 210 may acquire a plurality of input images, which respectively correspond to a plurality of views, through the input/output interface 220. However, the present disclosure is not limited thereto, and the at least one processor 210 may also acquire a plurality of input images stored in the memory 200.

Referring to FIGS. 1, 2, 8, and 9, in an embodiment, the operating method of the electronic device 100 may include acquiring an optical correction map 1040 (see FIG. 10B) including information about the positions of a plurality of pixels included in an image 111 displayed through a display 110 and information about the positions of a plurality of enlarged pixels included in an enlarged image 121 provided through an optical layer 120 arranged on the display 110, the enlarged image being obtained by enlarging the image 111 (S200).

In an embodiment, in the acquiring of the optical correction map 1040, the at least one processor 210 may acquire the optical correction map by executing instructions or program codes of the optical correction map acquisition module 201. In this case, the optical correction map may be pre-calculated and included in the memory 200. Furthermore, the at least one processor 210 may acquire the optical correction map from an external server or peripheral electronic device through a communication interface.

In an embodiment, the operating method of the electronic device 100 may include calculating the center point of each of the plurality of enlarged pixels respectively corresponding to the plurality of pixels by using the acquired optical correction map. In an embodiment, the at least one processor 210, in the calculating of the center point of each of the plurality of pixels, may calculate the center point of each of the plurality of enlarged pixels based on the information about the positions of the plurality of enlarged pixels, included in the acquired optical correction map. However, the present disclosure is not limited thereto, and the center point of each of the plurality of enlarged pixels may be pre-calculated and included in the acquired optical correction map.

In an embodiment, the operating method of the electronic device 100 may include classifying the plurality of enlarged pixels 720 as a plurality of enlarged view pixels 730 for displaying an enlarged pixel image corresponding to a plurality of view images, based on the information about the positions of the plurality of enlarged pixels, included in the obtained optical correction map 1040, and a plurality of view areas 710 (see FIG. 7B) corresponding to the plurality of view images provided through a lenticular lens 130 arranged on the optical layer 120 (S300).

In an embodiment, in the classifying of the plurality of enlarged pixels 720 as the plurality of enlarged view pixels 730 (S300), the at least one processor 210 may execute instructions or program codes of the enlarged view pixel allocation module 202 to thereby classify the plurality of enlarged pixels 720 as a plurality of enlarged view pixels 730 for displaying an enlarged pixel image corresponding to a plurality of view images, based on the information about the positions of the plurality of enlarged pixels, included in the obtained optical correction map 1040, and a plurality of view areas 710 (see FIG. 7B) corresponding to the plurality of view images provided through a lenticular lens 130 arranged on the optical layer 120. Hereinafter, the operation of classifying the plurality of enlarged pixels 720 as a plurality of enlarged view pixels 730 for displaying an enlarged pixel image corresponding to a plurality of view images will be described below with reference to FIGS. 11A and 11B.

In an embodiment, the operating method of the electronic device 100 may include classifying a plurality of pixels 700 as a plurality of view pixels respectively corresponding to a plurality of enlarged view pixels 730, based on the acquired optical correction map 1040. In an embodiment, in the classifying of the plurality of pixels 700 as a plurality of view pixels, the at least one processor 210 may classify the plurality of pixels 700 as a plurality of view pixels respectively corresponding to a plurality of enlarged view pixels 730 by executing instructions or program codes of the view pixel allocation module 203. In this case, the classifying of the plurality of pixels 700 as a plurality of view pixels may also be expressed as allocating the plurality of pixels 700 into a plurality of view pixels.

In an embodiment, the operating method of the electronic device 100 may include displaying, on the display 110, the plurality of input images as the image 111 on each of the plurality of view pixels respectively corresponding to the plurality of enlarged view pixels 730 from among the plurality of pixels 700 (S400). In an embodiment, the at least one processor 210 may display the plurality of input images as the image 111 on each of the plurality of view pixels by executing instructions or program codes of the image rendering module 206. In an embodiment, the at least one processor 210 may control, by executing instructions or program codes of the image rendering module 206, the display 110 to display the acquired plurality of input images as the image 111 after preprocessing the acquired plurality of input images or converting the acquired plurality of input images into data to be displayed on a plurality of pixels.

In an embodiment, the operation of classifying the plurality of enlarged pixels 720 as a plurality of enlarged view pixels 730 and the operation of classifying the plurality of pixels 700 as a plurality of view pixels may be performed together in a single operation. Also, as illustrated in FIG. 8, the operation of classifying the plurality of pixels 700 as a plurality of view pixels and displaying a plurality of input images as the image 111 on each of the plurality of classified view pixels may be performed in a single operation.

FIG. 10A is a view for explaining an optical correction map including information about the positions of a plurality of pixels and information about the positions of a plurality of enlarged pixels, according to an embodiment of the present disclosure. FIG. 10B is a view for explaining an optical correction map including information about the positions of a plurality of pixels and information about the positions of a plurality of enlarged pixels, according to an embodiment of the present disclosure.

Referring to FIGS. 1, 4, 10A, and 10B, in an embodiment, the optical correction map 1040 may include information about the positions of a plurality of pixels 1000 included in an image 111 and information about the positions of a plurality of enlarged pixels 1020, included in an enlarged image 121, corresponding to the plurality of pixels 1000.

**In** an embodiment, the information about the positions of the plurality of pixels 1000 may include information about the coordinates of the plurality of pixels 1000. In an embodiment, the information about the positions of the plurality of pixels 1000 may include coordinate information (e.g., (1,1), (2,1), (1,2), ..., and (1920,1080)) measured based on the upper left corner of each pixel.

In an embodiment, the plurality of enlarged pixels 1020 included in the enlarged image 121 may be provided by the plurality of pixels 1000 through the optical layer 120, respectively. In an embodiment, depending on the shape of the optical layer 120, the areas of the plurality of enlarged pixels 1020 corresponding to a plurality of first pixels adjacent to the bezel area 113 may be greater than the areas of the plurality of first pixels. In an embodiment, the area of each of the plurality of enlarged pixels corresponding to the plurality of first pixels may be greater than the area of each of the plurality of first pixels. In an embodiment, the areas of a plurality of enlarged pixels corresponding to a plurality of second pixels from among the plurality of enlarged pixels 1020 may be the same as the areas of the plurality of second pixels.

In an embodiment, the degree to which a pixel is enlarged by the optical layer 120 may increase as the pixel is closer to the bezel area 113. In an embodiment, the areas of the plurality of pixels 1000 may be the same. In an embodiment, the area of each of the plurality of enlarged pixels 1020 may increase towards the bezel area 113.

In an embodiment, the information about the positions of the plurality of enlarged pixels 1020 may include information about the coordinates of the plurality of enlarged pixels 1020. In an embodiment, the information about the positions of the plurality of enlarged pixels 1020 may include coordinate information (e.g., (x₁,y₁), (x₂,y₂), (x₃,y₃), ..., and (x_{K}, y_{L})) measured based on the upper left corner of each enlarged pixel.

In an embodiment, the optical correction map 1040 may include the information about the positions of the plurality of pixels 1000 and the information about the positions of the plurality of enlarged pixels 1020 respectively corresponding to the plurality of pixels 1000. In an embodiment, when the resolution of the image 111 is 1920*1080, the optical correction map 1040 may include information about the positions of 1920*1080 pixels included in the image 111 and information about the positions of 1920*1080 enlarged pixels respectively corresponding to the 1920*1080 pixels. In an embodiment, the information about the positions of the plurality of pixels may be from (1,1) to (1920,1080). The information about the positions of the plurality of enlarged pixels may be from (x₁,y₁) to (x_{K},y_{L}). In this case, K may be 1920 and L may be 1080. In an embodiment, x and y may be real numbers. x and y may be determined according to the degree to which the image (111) is enlarged according to the shape of the optical layer 120, the refractive index of the optical layer 120, etc. In an embodiment, as the degree to which the image 111 is enlarged increases, x and y may increase.

In an embodiment, each of the plurality of pixels 1000 may include at least one sub-pixel. In an embodiment, FIG. 10A illustrates that each pixel includes three sub-pixels. In an embodiment, the three sub-pixels may be a red pixel, a green pixel, and a blue pixel, respectively. The red pixel may emit light of a red wavelength, the green pixel may emit light of a green wavelength, and the blue pixel may emit light of a blue wavelength. Each pixel may display an image based on the combination of light emitted from the red pixel, green pixel, and blue pixel.

In an embodiment, the size ratio between and the shapes of the red pixel, green pixel, and blue pixel within one pixel may be predetermined according to the characteristics of the display 110. In an embodiment, the at least one processor 210 may calculate a center point 1010 of each of the three sub-pixels based on information about the position of each of the plurality of pixels 1000 included in the acquired optical correction map 1040 and the size ratio between and the shapes of the red pixel, green pixel, and blue pixel within one predetermined pixel. Hereinafter, for convenience of explanation, the three sub-pixels illustrated in FIG. 10A are described as having the same size and being obtained by dividing one pixel into three equal parts having rectangular shapes.

In an embodiment, the at least one processor 210 may calculate the horizontal and vertical lengths of one pixel by using information about the coordinates of two adjacent pixels included in the optical correction map 1040. The at least one processor 210 may calculate the horizontal and vertical lengths of three sub-pixels included in one pixel based on the calculated horizontal and vertical lengths of the one pixel. The at least one processor 210 may calculate a first center point 1010 included in each sub-pixel based on the calculated horizontal and vertical lengths of each of the three sub-pixels. In this case, the first center point 1010 may be the horizontal and vertical center of the sub-pixel. In an embodiment, the at least one processor 210 may store the calculated first center point 1010 of each sub-pixel in the optical correction map 1040.

Furthermore, in an embodiment, the at least one processor 210 may calculate the area of each pixel based on the calculated horizontal and vertical lengths of the pixel. The at least one processor 210 may calculate the area of each sub-pixel based on the calculated horizontal and vertical lengths of the three sub-pixels. In an embodiment, the at least one processor 210 may store the calculated area of each sub-pixel in the optical correction map 1040.

In an embodiment, each of the plurality of enlarged pixels 1020 may also include at least one sub-enlarged pixel. In an embodiment, when each of the plurality of pixels 1000 includes three sub-pixels, each of the plurality of enlarged pixels 1020 may also include three sub-enlarged pixels. The three sub-enlarged pixels may be pixels corresponding to the three sub-pixels, respectively.

In an embodiment, the three sub-enlarged pixels within one enlarged pixel may have the same size and may be obtained by dividing one enlarged pixel into three equal parts having rectangular shapes. However, the present disclosure is not limited thereto, and the size ratio between and the shapes of the three sub-enlarged pixels included in one enlarged pixel may vary depending on the size ratio between and the shapes of the three sub-pixels included in the one pixel.

In an embodiment, the at least one processor 210 may calculate the horizontal and vertical lengths of one enlarged pixel by using information about the coordinates of two adjacent enlarged pixels included in the optical correction map 1040. The at least one processor 210 may calculate the horizontal and vertical lengths of three sub-enlarged pixels included in one enlarged pixel based on the calculated horizontal and vertical lengths of one enlarged pixel. The at least one processor 210 may calculate a second center point 1030 included in each of the three sub-enlarged pixels based on the calculated horizontal and vertical lengths of each of the three sub-enlarged pixels. In this case, the second center point 1030 may be the horizontal and vertical center of the sub-enlarged pixel. In an embodiment, the at least one processor 210 may store the calculated second center point 1030 of each of the sub-enlarged pixels in the optical correction map 1040.

In addition, in an embodiment, the at least one processor 210 may calculate the area of each of the enlarged pixels based on the calculated horizontal and vertical lengths of one enlarged pixel. The at least one processor 210 may also calculate the area of each of the sub-enlarged pixels based on the calculated horizontal and vertical lengths of three sub-enlarged pixels. In an embodiment, the at least one processor 210 may store the calculated area of each of the sub-enlarged pixels in the optical correction map 1040.

However, the present disclosure is not limited thereto, and the optical correction map 1040 acquired by the at least one processor 210 may include at least one of the pre-measured information about the positions of the plurality of pixels 1000, the pre-measured information about the positions of the plurality of enlarged pixels 1020, the pre-calculated area of the plurality of pixels 1000, the pre-calculated area of the plurality of enlarged pixels 1020, the pre-calculated first center point 1010 of each of the plurality of pixels 1000, or the pre-calculated second center point 1030 of each of the plurality of enlarged pixels 1020.

FIG. 11A is a view for explaining an operation of classifying an enlarged view pixel and a view pixel by using a lenticular lens and a plurality of enlarged pixels included in an enlarged image provided through an optical layer, according to an embodiment of the present disclosure. FIG. 11B is a view for explaining an operation of classifying an enlarged view pixel by using a lenticular lens and a plurality of enlarged pixels included in an enlarged image provided through an optical layer, according to an embodiment of the present disclosure. Hereinafter, components identical to those described with reference to FIGS. 4, 7A, and 7B are assigned the same reference numerals, and redundant descriptions thereof are omitted.

Referring to FIGS. 1, 2, 4, and 11A, in an embodiment, FIG. 11A illustrates an image 111 displayed on the display 110, an enlarged image 121 enlarged by an optical layer 120, and a lenticular lens 130 providing the enlarged image 121.

In an embodiment, the image 111 may be enlarged by the optical layer 120 to overlap the bezel area 113 of the display 110. The enlarged image 121 may overlap the display area 112 and the bezel area 113 of the display 110.

In an embodiment, a plurality of enlarged pixels 1020 included in the enlarged image 121 may respectively correspond to a plurality of pixels 1000 included in the image 111. In an embodiment, the enlarged image 121 may include the plurality of enlarged pixels 1020 obtained as each of the plurality of pixels 1000 included in the image 111 is enlarged by the optical layer 120.

However, depending on the location within the enlarged image 121, some of the plurality of enlarged pixels 1020 included in the enlarged image 121 may be ones provided as is as some of the plurality of pixels 1000 corresponding thereto pass through the optical layer 120. In an embodiment, a plurality of first pixels 114 (see FIG. 3) adjacent to the bezel area 113 from among the plurality of pixels 1000 may be enlarged through the optical layer 120 and included in the enlarged image 121, and a plurality of second pixels 115 (see FIG. 3) spaced apart from the bezel area 113 from among the plurality of pixels 1000 may be included in the enlarged image 121 as is through the optical layer 120.

In an embodiment, the enlarged image 121 may be provided to the lenticular lens 130. In an embodiment, each of the plurality of lenses included in the lenticular lens 130 may include n view areas 710. Hereinafter, for convenience, the n view areas 710 included in one lens will be used for explanation.

In an embodiment, the plurality of enlarged pixels 1020 included in the enlarged image 121 may correspond to a plurality of view areas 710. In an embodiment, the at least one processor 210 may determine a plurality of enlarged pixels respectively corresponding to the plurality of view areas 710 from among the plurality of enlarged pixels 1020, and may classify a plurality of enlarged pixels, which are classified as corresponding to the same view area, as enlarged view pixels.

In an embodiment, the at least one processor 210 may classify the plurality of enlarged pixels 1020 as a plurality of enlarged view pixels respectively corresponding to the plurality of view areas 710. In an embodiment, the at least one processor 210 may classify the plurality of enlarged pixels 1020 as n enlarged view pixels. In an embodiment, each enlarged view pixel may include a plurality of enlarged pixels corresponding to any one of the n view areas 710 of the lenticular lens 130. In an embodiment, as the n view areas 710 included in the lenticular lens 130 are repeated according to the plurality of lenses, the classified n enlarged view pixels may also be repeated.

In an embodiment, the at least one processor 210 may determine a view area, in which the center points of the respective enlarged pixels overlap each other, from among the n view areas 710 as a view area corresponding to the respective enlarged pixels. In an embodiment, the center point of each enlarged pixel may be calculated using the optical correction map 1040 acquired by the at least one processor 210. However, the present disclosure is not limited thereto, and the center point of each enlarged pixel may be information included in the acquired optical correction map 1040.

In an embodiment, the shape, size, position information, etc. of each of the n view areas 710 may be determined by the shape, size, refractive index, number, arrangement, etc. of the plurality of lenses included in the lenticular lens 130. The shape, size, position information, etc. of each of the n view areas 710 may be measured in advance and stored in the memory 200.

In an embodiment, the at least one processor 210 may classify the plurality of enlarged pixels 1020 as n enlarged view pixels by using the center point of each of the enlarged pixels calculated using the acquired optical correction map 1040 and the shape, size, or position information of each of the n view areas 710.

In an embodiment, pixels respectively corresponding to a plurality of enlarged view pixels from among the plurality of pixels 1000 may be classified as a plurality of view pixels. The at least one processor 210 may use the acquired optical correction map 1040 to classify the pixels respectively corresponding to the plurality of enlarged view pixels from among the plurality of pixels 1000 as a plurality of view pixels. In an embodiment, the plurality of view pixels may respectively correspond to the plurality of enlarged view pixels.

In an embodiment, FIG. 11A illustrates that, in the case of an enlarged pixel overlapping the first view area and the second view area from among the plurality of enlarged pixels 1020, the center point of the enlarged pixel overlaps the second view area and thus the enlarged pixel is classified as an enlarged view pixel overlapping the second view area. In this case, a view pixel corresponding to the enlarged view pixel may also correspond to the second view area.

In an embodiment, FIG. 11A illustrates that, in the case of an enlarged pixel overlapping the third view area and the fourth view area from among the plurality of enlarged pixels 1020, the center point of the enlarged pixel overlaps the fourth view area and thus the enlarged pixel is classified as an enlarged view pixel overlapping the 24^{th} view area. In this case, a view pixel corresponding to the enlarged view pixel may also correspond to the fourth view area.

In an embodiment, FIG. 11A illustrates that, in the case of an enlarged pixel overlapping the n^{th} view area and the first view area of the next lens from among the plurality of enlarged pixels 1020, the center point of the enlarged pixel overlaps the first view area of the next lens and thus the enlarged pixel is classified as an enlarged view pixel overlapping the first view area. In this case, a view pixel corresponding to the enlarged view pixel may also correspond to the first view area.

In an embodiment, the at least one processor 210 may control the display 110 to display, on each of the plurality of view pixels, a pixel image for providing a view image corresponding to a view area. In this case, the pixel image displayed on each of the plurality of view pixels may be enlarged through the optical layer 120 and provided as an enlarged pixel image to a view area corresponding thereto.

Referring to FIGS. 1, 4, 11A, and 11B, in an embodiment, FIG. 11B illustrates a lenticular lens 130 and an enlarged image 121 enlarged by the optical layer 120 in the case where a pixel image corresponding to each of the plurality of view pixels classified in FIG. 11A by considering that the image 111 is enlarged due to the presence of the optical layer 120 is displayed.

In an embodiment, when a pixel image is displayed on each of the plurality of view pixels, an enlarged pixel image enlarged by the optical layer 120 may be provided to the lenticular lens 130.

In an embodiment, the hatched area in FIG. 11B may be an enlarged view pixel corresponding to a view pixel classified to correspond to the first view area. Compared to FIG. 7B, the enlarged view pixel corresponding to the first view area illustrated in FIG. 11B may not include an enlarged pixel classified to correspond to a view area other than the first view area. Therefore, even when a pixel image is displayed on a view pixel of the display 110 to provide a view image corresponding to the first view through the first view area and the pixel image is enlarged by the optical layer 120, an enlarged pixel image obtained by enlarging the pixel image may be prevented from being provided to a view area other than the first view area.

In an embodiment, the at least one processor 210 may classify a plurality of enlarged pixels as a plurality of view pixels based on information about the positions of a plurality of enlarged pixels acquired using the optical correction map 1040 and the relationship between a plurality of view areas included in the lenticular lens 130, and then may classify a plurality of pixels as a plurality of view pixels corresponding to the classified plurality of enlarged pixels through the optical correction map 1040.

Through this, even when an image enlarged by the optical layer 120 is provided to the lenticular lens 130, the image may be displayed on the display 110 by considering the degree to which the image is enlarged by the optical layer 120. Accordingly, by utilizing the plurality of sub-displays included in the display 110 and the optical layer 120, a user may be provided with a plurality of view images through an integrated enlarged image 121 without an area where the image is not displayed in the middle of a high resolution, and a desired view image may be provided according to the view in which the user is located, thereby improving user visibility.

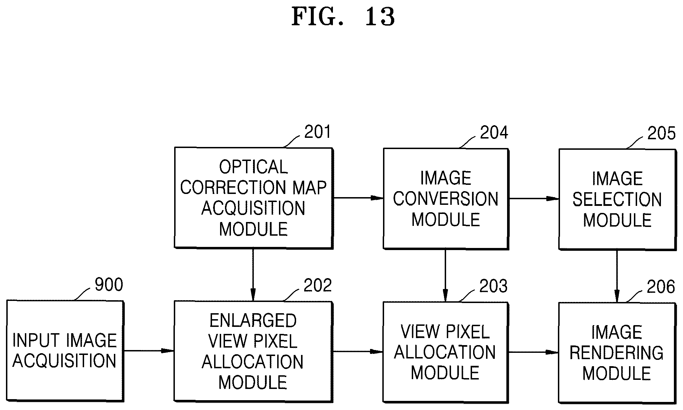

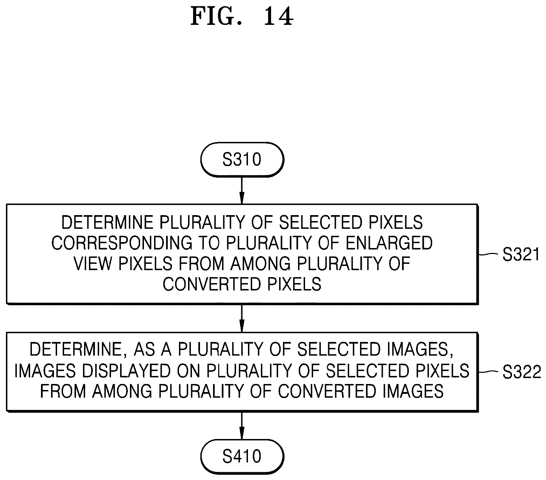

FIG. 12 is a flowchart for explaining an operation of an electronic device that displays an image by using a plurality of converted images whose resolutions are converted using an optical correction map, according to an embodiment of the present disclosure. FIG. 13 is a block diagram for explaining an operation of an electronic device that displays an image by using a plurality of converted images whose resolutions are converted using an optical correction map, according to an embodiment of the present disclosure. FIG. 14 is a flowchart for explaining an operation of determining a plurality of selected images among a plurality of converted images, according to an embodiment of the present disclosure. Hereinafter, components identical to those described with reference to FIG. 9 are assigned the same reference numerals, and redundant descriptions thereof are omitted.

Referring to FIGS. 1, 2, 12, and 13, in an embodiment, an operating method of the electronic device 100 may include, after acquiring an optical correction map 1040 (see FIG. 10B) (S200), calculating an enlargement ratio between the area of an image 111 and the area of an enlarged image 121 by using the acquired optical correction map 1040 (S210).

In this case, the enlargement ratio may be the ratio between the area of the enlarged image 121 and the area of the image 111. In an embodiment, when the area of the enlarged image 121 is 1.2 times the area of the image 111, the enlargement ratio may be 1.2.

In an embodiment, in the calculating of the enlargement ratio (S210), the enlargement ratio may be calculated using the area of the image 111 and the area of the enlarged image 121, calculated based on information about the positions of the plurality of pixels 1000 (see FIG. 11A) and information about the positions of the plurality of enlarged pixels 1020 (see FIG. 11A), included in the optical correction map 1040. In an embodiment, in the calculating of the enlargement ratio S210, the enlargement ratio may also be calculated using the areas of the plurality of pixels 1000 and the areas of the plurality of enlarged pixels 1020, calculated using the optical correction map 1040.

In an embodiment, in the calculating of the enlargement ratio S210, the at least one processor 210 may calculate the enlargement ratio between the area of the image 111 and the area of the enlarged image 121 by using the acquired optical correction map 1040.

In an embodiment, the operating method of the electronic device 100 may include converting the resolutions of a plurality of input images by using the calculated enlargement ratio (S310). In an embodiment, in the converting of the resolutions of the plurality of input images (S310), the plurality of input images may be converted into a plurality of converted images each having a high resolution by using the calculated enlargement ratio.

In an embodiment, when the resolution of each of the acquired plurality of input images is a first resolution, the resolution of the image 111 displayed on the display 110 may also be the first resolution. In this case, the resolution of the image 111 may refer to the resolution of a pixel image displayed on each of the plurality of view pixels. The input images may be input images corresponding to different views, and a pixel image displayed on each of the plurality of view pixels may also be an image displayed to provide a view image from different views. Hereinafter, for convenience of explanation, the resolution of the image 111 displayed on the display 110 is described as the first resolution.

However, the present disclosure is not limited thereto, and even when the resolution of the acquired plurality of input images is not the first resolution, the resolution of the acquired plurality of input images may be converted to display an image 111 having the first resolution on the display 110. Hereinafter, for convenience of explanation, it will be described that the resolution of the acquired plurality of input images and the resolution of the image 111 displayed on the display 110 are each the first resolution.

In an embodiment, in the converting of the resolution of the plurality of input images (S310), the plurality of input images may be converted into a plurality of converted images by using the enlargement ratio so that the plurality of input images have a second resolution obtained by multiplying the first resolution by the enlargement ratio. In this case, the plurality of input images may be images having the first resolution, and the plurality of converted images may be images having the second resolution.

In an embodiment, the at least one processor 210 may execute instructions or program codes of the image conversion module 204 to convert the plurality of input images into a plurality of converted images by using the calculated enlargement ratio so that the plurality of input images have a second resolution obtained by multiplying the first resolution by the enlargement ratio. The at least one processor 210 may execute instructions or program codes of the image conversion module 204 to convert a plurality of input images having a first resolution into a plurality of converted images having a second resolution obtained by multiplying the first resolution by the enlargement ratio.

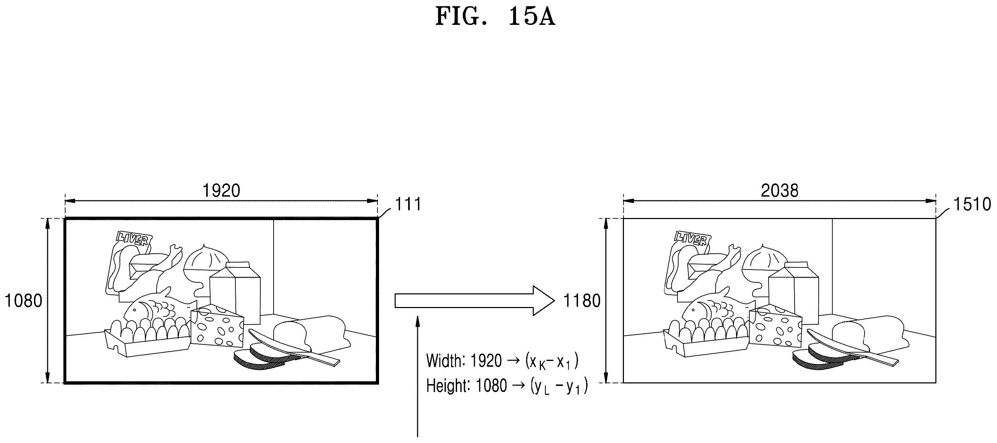

Hereinafter, the operation of converting a plurality of input images having a first resolution into a plurality of converted images having a second resolution will be described below with reference to FIG. 15A.

In an embodiment, the operating method of the electronic device 100 may include determining, by using the optical correction map 1040, a plurality of selected images to be displayed on a plurality of view pixels from among the plurality of converted images (S320).

In an embodiment, the plurality of converted images have a second resolution higher than the first resolution, and a pixel image having the first resolution is displayed on each of the plurality of view pixels. Therefore, in order to display the pixel image based on the plurality of converted images, an image to be displayed on the plurality of view pixels has to be selected from among the plurality of converted images. In an embodiment, the plurality of selected images may be images selected to be displayed on the plurality of view pixels from among the plurality of converted images. In this case, the plurality of selected images may have the first resolution.

In an embodiment, in the determining of the plurality of selected images (S320), the at least one processor 210 may execute instructions or program codes of the image selection module 205 to determine, by using the optical correction map 1040, the plurality of selected images to be displayed on the plurality of view pixels from among the plurality of converted images.

Referring to FIGS. 12 and 14, in an embodiment, in the determining of the plurality of selected images (S320), a plurality of selected images corresponding to each of the plurality of enlarged view pixels from among the plurality of converted images may be determined based on information about the positions of the plurality of enlarged pixels.

In an embodiment, the plurality of converted pixels may be pixels included in a plurality of converted images. In an embodiment, the second resolution of the plurality of converted images may refer to the number of the plurality of converted pixels included in the plurality of converted images. In an embodiment, the plurality of converted images may be images obtained as the resolution of a plurality of input images corresponding to the area of the image 111 and having the first resolution is converted into the second resolution to correspond to the area of the enlarged image 121. In an embodiment, the area of each of the plurality of converted pixels may be the same as the area of each of the plurality of pixels, and the number of the plurality of converted pixels may be greater than the number of the plurality of pixels.

In an embodiment, the area of at least one enlarged pixel adjacent to the bezel area 113 from among the plurality of enlarged pixels may be greater than the area of at least one pixel corresponding thereto. The number of the plurality of enlarged pixels may be the same as the number of the plurality of pixels.

In an embodiment, the determining of the plurality of selected images (S320) may include determining a plurality of selected pixels corresponding to the plurality of enlarged view pixels from among the plurality of converted pixels based on information about the positions of the plurality of converted pixels and information about the positions of the plurality of enlarged pixels (S321).

In an embodiment, in the determining of the plurality of selected pixels corresponding to the plurality of enlarged pixels from among the plurality of converted pixels (S321), a plurality of selected pixels corresponding to a plurality of enlarged pixels having the number of first resolutions may be determined among the plurality of converted pixels having the number of second resolutions based on the information about the positions of the plurality of converted pixels and the information about the positions of the plurality of enlarged pixels.

In an embodiment, in the determining of the plurality of selected pixels from among the plurality of converted pixels (S321), the at least one processor 210 may execute instructions or program codes of the image selection module 205 to determine the plurality of selected pixels corresponding to the plurality of enlarged pixels from among the plurality of converted pixels based on the information about the positions of the plurality of converted pixels and the information about the positions of the plurality of enlarged pixels.

In an embodiment, the determining of the plurality of selected images (S320) may include determining, as a plurality of selected images, images displayed on the plurality of selected pixels from among a plurality of converted images (S322).

In an embodiment, the plurality of selected pixels may be some of a plurality of converted pixels included in the plurality of converted images. The plurality of selected images may be some of the plurality of converted images. Each of the plurality of selected images may have the first resolution, and each of the plurality of converted images may be an image having the second resolution.

In an embodiment, in the determining of the plurality of selected images from among the plurality of converted images (S322), the at least one processor 210 may execute instructions or program codes of the image selection module 205 to determine, as the plurality of selected images, images displayed on the plurality of selected pixels from among the plurality of converted images.

Although FIG. 14 illustrates separately the determining of the plurality of selected pixels corresponding to the plurality of enlarged view pixels from among the plurality of converted pixels (S321) and the determining of the plurality of selected images displayed on the plurality of selected pixels from among the plurality of converted images (S322), the present disclosure is not limited thereto. In an embodiment, the determining of the plurality of selected pixels corresponding to the plurality of enlarged view pixels from among the plurality of converted pixels and the determining of the plurality of selected images displayed on the plurality of selected pixels from among the plurality of converted images may be performed in a single operation.

Hereinafter, the operation of determining a plurality of selected images from among a plurality of converted images by using the optical correction map 1040 will be described below with reference to FIGS. 15A to 15C.

In an embodiment, the operating method of the electronic device 100 may include displaying the plurality of selected images as the image 111 on each of a plurality of view pixels (S410).

In an embodiment, in the displaying of the plurality of selected images as the image 111 (S410), the at least one processor 210 may execute instructions or program codes of the image rendering module 206 to display the plurality of selected images on each of the plurality of view pixels. The plurality of selected images displayed on the plurality of view pixels may be provided to the lenticular lens 130 as a plurality of enlarged view pixels through the optical layer 120 and provided to the user as the content 131.

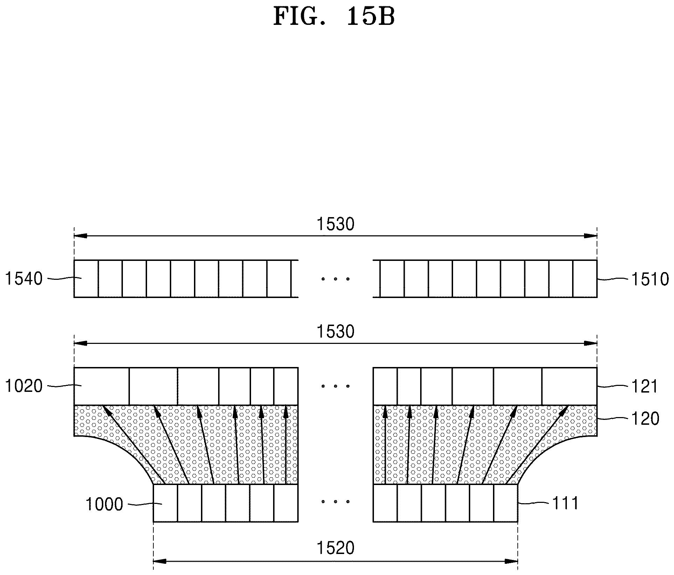

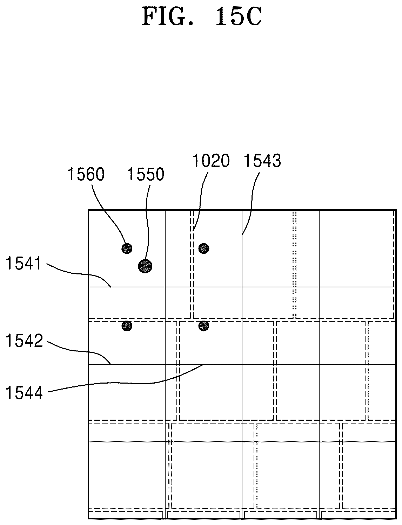

FIG. 15A is a view for explaining an enlargement ratio between the area of an image and the area of an enlarged image and a plurality of converted images converted to have a second resolution, according to an embodiment of the present disclosure. FIG. 15B is a view for explaining a plurality of input images and a plurality of converted images whose resolutions are converted using an enlargement ratio, according to an embodiment of the present disclosure. FIG. 15C is a view for explaining an operation of determining a plurality of selected pixels from among a plurality of converted pixels, according to an embodiment of the present disclosure.

Referring to FIGS. 1, 10B, 15A, and 15B, FIG. 15A illustrates one input image 1500 among a plurality of input images having a first resolution and one converted image 1510 among a plurality of converted images having a second resolution. For convenience of explanation, the following description will be based on one input image 1500 and one converted image 1510. However, the present disclosure is not limited thereto.

In an embodiment, the plurality of input images may include a plurality of input pixels. The first resolution may correspond to the number of the plurality of input pixels included in the plurality of input images. In an embodiment, the plurality of converted images may include a plurality of converted pixels. The second resolution may correspond to the number of the plurality of converted pixels included in the plurality of converted images.

In an embodiment, the area of an image 111 and the area of an enlarged image 121 may be calculated using the acquired optical correction map 1040. In an embodiment, the area of the image 111 and the area of the enlarged image 121 may be calculated using information about the position of each of the plurality of pixels included in the acquired optical correction map 1040 and information about the position of each of the plurality of enlarged pixels.

In an embodiment, referring to the optical correction map 1040 illustrated in FIG. 10B, it may be confirmed that information about the position of the first pixel in the upper left corner from among the plurality of pixels is (1,1) and information about the position of the last pixel in the lower right corner is (1920,1080). Based on this, the area of the image 111 may be calculated to have a size of 1920 in width and 1080 in height. In this case, the unit of the width and height of the image 111 may be the size of a unit pixel and may be relatively calculated. In an embodiment, the area of the image 111 may be a size in which 1920 pixels are arranged horizontally and 1080 pixels are arranged vertically.

In an embodiment, referring to the optical correction map 1040 illustrated in FIG. 10B, it may be confirmed that information about the position of the first pixel in the upper left corner from among the plurality of enlarged pixels is (x1,y1) and information about the position of the last pixel in the lower right corner is (x_{K},y_{L}). Based on this, the area of the enlarged image 111 may be calculated to have a size of xₖ-x₁ in width and y_{L}-y₁ in height. In this case, the unit of the width and height of the enlarged image 111 may be the size of a unit pixel and may be relatively calculated. In an embodiment, the area of the enlarged image 121 may have a size in which x_{K}-x₁ pixels are horizontally arranged and y_{L}-y₁ pixels are vertically arranged. In an embodiment, in FIG. 15A, x_{K}-x₁ is illustrated as being 2038, and y_{L}-y₁ is illustrated as being 1180. However, x_{K}-x₁ and y_{L}-y₁ may be determined according to the degree to which the image 111 is enlarged according to the shape of the optical layer 120, the refractive index of the optical layer 120, etc., and is not limited thereto.

In an embodiment, the at least one processor 210 may execute instructions or program codes of the image conversion module 204 to upscale an input image 1500 having the first resolution and convert the input image 1500 into a converted image 1510 having the second resolution. In an embodiment, the at least one processor 210 may generate a plurality of converted pixels from a plurality of pixels included in the input image 1500 by using an interpolation algorithm, thereby generating the converted image 1510.

In an embodiment, the first resolution may include 1920 pixels horizontally and 1080 pixels vertically. In an embodiment, the plurality of input pixels included in the input image 1500 may have the first resolution. In this case, the input image 1500 having the first resolution may be an image corresponding to the image 111 displayed in the display area 112. The image 111 may be displayed in the display area 112 at the first resolution.

In an embodiment, the second resolution may include 2038 pixels horizontally and 1180 pixels vertically. In an embodiment, the plurality of converted pixels included in the converted image 1510 may have the second resolution. In this case, the converted image 1510 having the second resolution may be an image corresponding to the enlarged image 121 provided to the display area 112 and the bezel area 113. The enlarged image 121 may be enlarged like an image having the second resolution in the display area 112 and the bezel area 113 and provided at the first resolution.

Referring to FIGS. 15A and 15B, in an embodiment, a plurality of pixels 1000 included in the image 111 displayed through the display 110 may have the first resolution, and the size of the image 111 may be a first area 1520 corresponding to the first resolution.

In an embodiment, a plurality of enlarged pixels 1020 included in the enlarged image 121 provided by enlarging the image 111 through the optical layer 120 may have the first resolution, and the size of the enlarged image 121 may be a second area 1530 corresponding to the second resolution. Because the area of at least one of the plurality of enlarged pixels 1020 is greater than the area of at least one corresponding pixel enlarged by the optical layer 120, the plurality of enlarged pixels 1020 arranged in the second area 1530 may have the first resolution.

In an embodiment, a plurality of converted pixels 1540 included in a converted image 1510 into which the input image 111 is converted may have the second resolution, and the size of the converted image 1510 may be a second area 1530 corresponding to the second resolution. In an embodiment, the converted image 1510 converted to have the second resolution may be an image in which the entire area of the input image 111 having the first resolution is naturally converted to the second resolution through an interpolation algorithm, rather than an image (e.g., an image displayed in a pixel adjacent to the bezel area 113) in which only a certain area is enlarged like the enlarged image 121. In an embodiment, when the enlargement ratio is 1.2, the converted image 1510 may be an image converted by a method of making 6 converted pixels by using 5 pixels through an interpolation algorithm in the entire area of the input image 111.

In an embodiment, the at least one processor 210 may determine a selected image to be displayed on a view pixel of the display 110 from the converted image 1510 by executing instructions or program codes of the image selection module 205. However, because the selected image displayed on the view pixel is enlarged through the optical layer 120 and provided to the lenticular lens 130, the at least one processor 210 may determine the selected image from the converted image 1510 by considering that an image displayed on the view pixel is enlarged through the optical layer 120.

Referring to FIGS. 15A, 15B, and 15C, in an embodiment, the at least one processor 210 may execute instructions or program codes of the image selection module 205 to determine a selected pixel corresponding to the plurality of enlarged pixels 1020 from among a plurality of converted pixels 1541, 1542, 1543, and 1544 included in the converted image 1510.

In an embodiment, the at least one processor 210 may calculate a center point 1550 of each of the plurality of enlarged pixels 1020 by using the optical correction map 1040 and may determine converted pixels closest to the calculated center point 1550 among the center points of the plurality of converted pixels 1541, 1542, 1543, and 1544 as a plurality of selected pixels. In an embodiment, when the plurality of converted pixels 1541, 1542, 1543, and 1543 include a first converted pixel 1541, a second converted pixel 1542, a third converted pixel 1543, and a fourth converted pixel 1544 and each of the converted pixels includes a center point 1560, the at least one processor 210 may calculate a distance between the center point 1550 of one of the plurality of enlargement pixels 1020 and the center point 1560 of each of the first to fourth converted pixels 1541, 1542, 1543, and 1544 and determine a first converted pixel, which has a center point 1560 that is closest to the center point 1550 of the enlargement pixel 1020, as a selected pixel corresponding to the enlargement pixel 1020.

However, the present disclosure is not limited thereto, and the at least one processor 210 may determine, as a selected pixel, the first converted pixel 1541 overlapping the center point 1550 of the enlarged pixel 1020 from among the plurality of converted pixels 1541, 1542, 1543, and 1544.

In an embodiment, the at least one processor 210 may determine, as a selected image, an image displayed on a plurality of selected pixels from the converted image 1510 by executing instructions or program codes of the image selection module 205. **In** an embodiment, a plurality of converted pixels included in the converted image 1510 may have the second resolution, and a plurality of selected pixels may have the first resolution. The least one processor 210 may determine, as a selected image, an image corresponding to a determined plurality of selected pixels from the converted image 1510.

In an embodiment, a selected image selected from the converted image 1510 having the second resolution may have the first resolution. The at least one processor 210 may control the display 110 to display a selected image on a view pixel classified to correspond to an enlarged view pixel through the view pixel allocation module 203.

In an embodiment, the enlarged image 121 provided through the optical layer 120 may be selected from the converted image 1510 having the second resolution. Accordingly, even when a selected image displayed as the image 111 on a view pixel is enlarged to have the second area 1530 through the optical layer 120 in a portion adjacent to the bezel area 113, the enlarged image 121 may appear as if only a portion (e.g., an area adjacent to the bezel area 113) of an input image having the first resolution is awkwardly enlarged and the converted image 1510 having the second resolution is naturally provided by a plurality of enlarged pixels having the first resolution.

Through this, the electronic device 100 may provide the user with content 131 using an enlarged image 121 that is naturally enlarged as if the resolution is increased, rather than content 131 using an enlarged image 121 in which only a portion of the image is awkwardly enlarged by the optical layer 120 to prevent the bezel area from being visible to the user, and thus, the user may not feel a sense of incongruity.

Effects obtainable from the present disclosure are not limited to the aforementioned technical effects, and other effects not mentioned will be clearly understood by a person skilled in the art to which the present disclosure pertains from the following description.

To address the above-described technical problem, in an embodiment of the present disclosure, an electronic device is provided. The electronic device may include a display that displays an image including a plurality of pixels. The electronic device may include an optical layer arranged on the display and enlarging the image to provide an enlarged image including a plurality of enlarged pixels. The electronic device may include a lenticular lens arranged on the optical layer and providing a plurality of view images based on the enlarged image. The electronic device may include memory that stores at least one instruction. The electronic device may include at least one processor that executes the at least one instruction stored in the memory. The at least one processor may acquire a plurality of input images respectively corresponding to a plurality of views. The at least one processor may acquire an optical correction map including information about the positions of the plurality of pixels and information about the positions of the plurality of enlarged pixels. The at least one processor may classify the plurality of enlarged pixels as a plurality of enlarged view pixels for displaying an enlarged pixel image corresponding to the plurality of view images, based on the information about the positions of the plurality of enlarged pixels and a plurality of view areas included in the lenticular lens. The at least one processor may display the plurality of input images as the image on each of a plurality of view pixels respectively corresponding to the plurality of enlarged view pixels from among the plurality of pixels, based on the acquired optical correction map.

In an embodiment of the present disclosure, the display may include a display area where the image is displayed and a bezel area adjacent to the display area. The area of the enlarged image may be greater than the area of the image. The enlarged image may overlap the display area and the bezel area.

In an embodiment of the present disclosure, the display may include a plurality of sub-displays. Each of the plurality of sub-displays may include a sub-display area on which a sub-image is displayed and a sub-bezel area adjacent to the sub-display area. The optical layer may provide the enlarged image 121 by enlarging a plurality of sub-images respectively displayed on the plurality of sub-displays. The enlarged image 121 may be provided to overlap a plurality of sub-display areas of the plurality of sub-displays and a plurality of sub-bezel areas of the plurality of sub-displays.

In an embodiment of the present disclosure, the plurality of pixels may include a plurality of first pixels adjacent to the bezel area and a plurality of second pixels spaced apart from the bezel area. The plurality of enlarged pixels may respectively correspond to the plurality of pixels. The area of each of a plurality of enlarged pixels corresponding to the plurality of first pixels from among the plurality of enlarged pixels may be greater than the area of each of the plurality of first pixels.

In an embodiment of the present disclosure, the optical correction map may the information about the position of each of the plurality of pixels and the information about the position of each of the plurality of enlarged pixels enlarged by the optical layer and respectively corresponding to the plurality of pixels.

In an embodiment of the present disclosure, when the resolution of the image displayed on the display is referred to as a first resolution, the at least one processor may calculate an enlargement ratio between the area of the image and the area of the enlarged image. The at least one processor may convert, by using the calculated enlargement ratio, the plurality of input images into a plurality of converted images such that the plurality of input images have a second resolution obtained by multiplying the first resolution by the enlargement ratio. The at least one processor may determine, by using the optical correction map, a plurality of selected images to be displayed on the plurality of view pixels from among the plurality of converted images. The at least one processor may display the plurality of selected images as the image on each of the plurality of view pixels.

In an embodiment of the present disclosure, the at least one processor may determine, based on the information about the positions of the plurality of enlarged pixels, the plurality of selected images corresponding to each of the plurality of enlarged view pixels from among the plurality of converted images. The at least one processor may display the plurality of selected images as the image on each of the plurality of view pixels corresponding to the plurality of enlarged view pixels.

In an embodiment of the present disclosure, the at least one processor may upscale the plurality of input images having the first resolution to convert the plurality of input images into the plurality of converted images having the second resolution. The resolution of the plurality of selected images determined from among the plurality of converted images may be the first resolution.

In an embodiment of the present disclosure, the plurality of converted images may include a plurality of converted pixels. The at least one processor may determine a plurality of selected pixels corresponding to the plurality of enlarged view pixels from among the plurality of converted pixels based on information about the positions of the plurality of converted pixels and the information about the positions of the plurality of enlarged pixels. The at least one processor may determine images displayed on the plurality of selected pixels from among the plurality of converted images as the plurality of selected images.

In an embodiment of the present disclosure, the at least one processor may determine converted pixels each having a center point closest to a center point of each of at least one enlarged pixel included in the plurality of enlarged view pixels from among the plurality of converted pixels as the plurality of selected pixels.

To address the above-described technical problems, an embodiment of the present disclosure provides an operating method of an electronic device. The operating method of the electronic device may include acquiring a plurality of input images respectively corresponding to a plurality of views. The operating method of the electronic device may include acquiring an optical correction map including information about the positions of a plurality of pixels included in an image displayed through a display and information about the positions of a plurality of enlarged pixels included in an enlarged image provided through an optical layer arranged on the display, the enlarged image being obtained by enlarging the image. The operating method of the electronic device may include classifying the plurality of enlarged pixels as a plurality of enlarged view pixels for displaying an enlarged pixel image corresponding to a plurality of view images, based on the information about the positions of the plurality of enlarged pixels and a plurality of view areas corresponding to the plurality of view images provided through a lenticular lens arranged on the optical layer. The operating method of the electronic device may include displaying, on the display, the plurality of input images as the image on each of a plurality of view pixels respectively corresponding to the plurality of enlarged view pixels from among the plurality of pixels, based on the acquired optical correction map.

In an embodiment of the present disclosure, the resolution of the image displayed on the display may be referred to as a first resolution. The operating method of the electronic device may include calculating an enlargement ratio between the area of the image and the area of the enlarged image. The operating method of the electronic device may include converting, by using the calculated enlargement ratio, the plurality of input images into a plurality of converted images such that the plurality of input images have a second resolution obtained by multiplying the first resolution by the enlargement ratio. The operating method of the electronic device may include determining, by using the optical correction map, a plurality of selected images to be displayed on the plurality of view pixels from among the plurality of converted images. The operating method of the electronic device may include displaying the plurality of selected images as the image on each of the plurality of view pixels.

In an embodiment of the present disclosure, in the determining of the plurality of selected images, the plurality of selected images corresponding to each of the plurality of enlarged view pixels from among the plurality of converted images may be determined based on the information about the positions of the plurality of enlarged pixels. In the displaying of the plurality of selected images as the image, the plurality of selected images may be displayed as the image on each of the plurality of view pixels corresponding to the plurality of enlarged view pixels.

In an embodiment of the present disclosure, in the converting of the plurality of input images into a plurality of converted images, the plurality of input images having the first resolution may be upscaled to be converted into the plurality of converted images having the second resolution. In the determining of the plurality of selected images from among the plurality of converted images, the determined plurality of selected images may have the first resolution.

In an embodiment of the present disclosure, the plurality of converted images may include a plurality of converted pixels. The determining of the plurality of selected images may include determining a plurality of selected pixels corresponding to the plurality of enlarged view pixels from among the plurality of converted pixels based on information about the positions of the plurality of converted pixels and the information about the positions of the plurality of enlarged pixels. The determining of the plurality of selected images may include determining images displayed on the plurality of selected pixels from among the plurality of converted images as the plurality of selected images.

To address the above-described technical problems, provided is a computer-readable recording medium having recorded thereon a computer program, which, when executed by a computer, performs at least one of the above-disclosed operating methods of an electronic device.

The program executed by the electronic device described above herein may be implemented as a hardware component, a software component, and /or a combination of hardware components and software components. The program may be executed by any system capable of executing computer readable instructions.

The software may include a computer program, a code, instructions, or a combination of one or more of the foregoing, and may constitute a processing device so that the processing device can operate as desired, or may independently or collectively instruction the processing device.

The software may be implemented as a computer program including instructions stored in computer-readable storage media. Examples of the computer-readable recording media include magnetic storage media (e.g., ROM, RAM, floppy disks, hard disks, etc.), and optical recording media (e.g., CD-ROMs, or digital versatile discs (DVDs)). The computer-readable recording media can be distributed over network coupled computer systems so that the computer-readable code is stored and executed in a distributive manner. These recording media can be read by the computer, stored in memory, and executed by a processor.

A computer-readable storage medium may be provided as a non-transitory storage medium. The 'non-transitory storage medium' is a tangible device and only means that it does not contain a signal (e.g., electromagnetic waves). This term does not distinguish a case in which data is stored semi-permanently in a storage medium from a case in which data is temporarily stored. For example, the non-transitory storage medium may include a buffer in which data is temporarily stored.

Programs according to various embodiments disclosed herein may be provided by being included in computer program products. The computer program product, which is a commodity, may be traded between sellers and buyers.

Computer program products may include a software program and a computer-readable storage medium having the software program stored thereon. For example, computer program products may include a product in the form of a software program (e.g., a downloadable application) that is electronically distributed through electronic device manufacturers or electronic markets (e.g., Samsung Galaxy Store). For electronic distribution, at least a portion of the software program may be stored on a storage medium or may be created temporarily. In this case, the storage medium may be a server of a manufacturer of an electronic device, a server of an electronic market, or a storage medium of a relay server for temporarily storing a software program.

While the present disclosure has been particularly shown and described with reference to examples thereof, it will be understood by those of ordinary skill in the art that various changes in form and details may be made therein without departing from the spirit and scope of the present disclosure as defined by the following claims. For example, an appropriate result may be attained even when the above-described techniques are performed in a different order from the above-described method, and/or components, such as the above-described computer system or module, are coupled or combined in a different form from the above-described methods or substituted for or replaced by other components or equivalents thereof.

## Claims

1. An electronic device (100) comprising:
a display (110) displaying an image including a plurality of pixels;
an optical layer (120) arranged on the display (110) and enlarging the image to provide an enlarged image (121) including a plurality of enlarged pixels;
a lenticular lens (130) arranged on the optical layer (120) and providing a plurality of view images based on the enlarged image (121);
memory storing at least one instruction; and
at least one processor executing the at least one instruction stored in the memory,
wherein the at least one processor
acquires a plurality of input images respectively corresponding to a plurality of views;
acquires an optical correction map including information about positions of the plurality of pixels and information about positions of the plurality of enlarged pixels;
classifies the plurality of enlarged pixels as a plurality of enlarged view pixels for displaying an enlarged pixel image corresponding to the plurality of view images, based on the information about the positions of the plurality of enlarged pixels and a plurality of view areas included in the lenticular lens (130); and
displays the plurality of input images as the image on each of a plurality of view pixels respectively corresponding to the plurality of enlarged view pixels from among the plurality of pixels, based on the acquired optical correction map.

2. The electronic device (100) of claim 1, wherein the display (110) includes a display area (112) where the image is displayed and a bezel area (113) adjacent to the display area (112), the area of the enlarged image (121) is greater than the area of the image, and the enlarged image (121) is provided to overlap the display area (112) and the bezel area (113).

3. The electronic device (100) of any one of claims 1 or 2, wherein the display (110) includes a plurality of sub-displays, each of the plurality of sub-displays includes a sub-display area on which a sub-image is displayed and a sub-bezel area adjacent to the sub-display area, the optical layer (120) provides the enlarged image (121) by enlarging a plurality of sub-images respectively displayed on the plurality of sub-displays, and the enlarged image (121) is provided to overlap a plurality of sub-display areas of the plurality of sub-displays and a plurality of sub-bezel areas of the plurality of sub-displays.

4. The electronic device (100) of any one of claims 2 or 3, wherein the
plurality of pixels include a plurality of first pixels adjacent to the bezel area and a plurality of second pixels spaced apart from the bezel area, the plurality of enlarged pixels correspond to the plurality of pixels, respectively, and the area of each of a plurality of enlarged pixels corresponding to the plurality of first pixels from among the plurality of enlarged pixels is greater than the area of each of the plurality of first pixels.

5. The electronic device (100) of any one of claims 1 to 4, wherein the optical correction map includes the information about the position of each of the plurality of pixels and the information about the position of each of the plurality of enlarged pixels enlarged by the optical layer and respectively corresponding to the plurality of pixels.

6. The electronic device (100) of any one of claims 1 to 5, wherein,
when a resolution of the image displayed on the display (110) is a first resolution, the at least one processor calculates an enlargement ratio between the area of the image and the area of the enlarged image, converts, by using the calculated enlargement ratio, the plurality of input images into a plurality of converted images such that the plurality of input images have a second resolution obtained by multiplying the first resolution by the enlargement ratio, determines, by using the optical correction map, a plurality of selected images to be displayed on the plurality of view pixels from among the plurality of converted images, and displays the plurality of selected images as the image on each of the plurality of view pixels.

7. The electronic device (100) of claim 6, wherein the at least one processor determines, based on the information about the positions of the plurality of enlarged pixels, the plurality of selected images respectively corresponding to the plurality of enlarged view pixels from among the plurality of converted images, and displays the plurality of selected images as the image on each of the plurality of view pixels corresponding to the plurality of enlarged view pixels.

8. The electronic device (100) of any one of claim 6 or 7, wherein the at least one processor upscales the plurality of input images having the first resolution to convert the plurality of input images into the plurality of converted images having the second resolution, and a resolution of the plurality of selected images determined from among the plurality of converted images is the first resolution.

9. The electronic device (100) of any one of claims 6 to 8, wherein the
plurality of converted images include a plurality of converted pixels, and the at least one processor determines a plurality of selected pixels corresponding to the plurality of enlarged view pixels from among the plurality of converted pixels based on information about positions of the plurality of converted pixels and the information about the positions of the plurality of enlarged pixels, and determines images displayed on the plurality of selected pixels from among the plurality of converted images as the plurality of selected images.

10. The electronic device (100) of claim 9, wherein the at least one processor determines converted pixels each having a center point closest to a center point of each of at least one enlarged pixel included in the plurality of enlarged view pixels from among the plurality of converted pixels as the plurality of selected pixels.

11. An operating method of an electronic device (100), comprising:
acquiring a plurality of input images respectively corresponding to a plurality of views (S100);
acquiring an optical correction map including information about positions of a plurality of pixels included in an image displayed through a display (110) and information about positions of a plurality of enlarged pixels included in an enlarged image provided through an optical layer (120) arranged on the display (110), the enlarged image being obtained by enlarging the image (S200);
classifying the plurality of enlarged pixels as a plurality of enlarged view pixels for displaying an enlarged pixel image corresponding to a plurality of view images, based on the information about the positions of the plurality of enlarged pixels and a plurality of view areas corresponding to the plurality of view images provided through a lenticular lens (130) arranged on the optical layer (120) (S300); and
displaying, on the display (110), the plurality of input images as the image on each of a plurality of view pixels respectively corresponding to the plurality of enlarged view pixels from among the plurality of pixels, based on the acquired optical correction map (S400).

12. The operating method of claim 11, wherein the display (110) includes a
display area (112) where the image is displayed and a bezel area (113) adjacent to the display area (112), the area of the enlarged image is greater than the area of the image, and the enlarged image is provided to overlap the display area (112) and the bezel area.

13. The operating method of any one of claim 11 or 12, wherein the display
(110) includes a plurality of sub-displays, each of the plurality of sub-displays includes a sub-display area on which a sub-image is displayed and a sub-bezel area adjacent to the sub-display area, the optical layer (120) provides the enlarged image by enlarging a plurality of sub-images respectively displayed on the plurality of sub-displays, and the enlarged image (121) is provided to overlap a plurality of sub-display areas of the plurality of sub-displays and a plurality of sub-bezel areas of the plurality of sub-displays.

14. The operating method of any one of claim 12 or 13, wherein the plurality
of pixels include a plurality of first pixels adjacent to the bezel area and a plurality of second pixels spaced apart from the bezel area, the plurality of enlarged pixels correspond to the plurality of pixels, respectively, and the area of each of a plurality of enlarged pixels corresponding to the plurality of first pixels from among the plurality of enlarged pixels is greater than the area of each of the plurality of first pixels.

15. A computer-readable recording medium having recorded thereon a
computer program, which, when executed by a computer, performs the operating method of any one of claims 11 to 14.
